# EUROPÄISCHE PATENTSCHRIFT

(11) **EP 3 703 487 B1**
(45) Veröffentlichungstag und Bekanntmachung des Hinweises auf die Patenterteilung: **21.09.2022**
(21) Anmeldenummer: 18804519.9
(22) Anmeldetag: 30.10.2018
(51) Int. Cl.: A01F 12/00, A01F 12/18, A01F 12/44, A01D 41/02, A01D 41/12

(54) **VERFAHREN ZUM ERNTEN VON DRUSCHFRÜCHTEN SOWIE DAFÜR VORGESEHENE VORRICHTUNG FÜR EINE ERNTEMASCHINE**
METHOD FOR HARVESTING GRAIN CROPS, AND APPARATUS, PROVIDED THEREFOR, FOR A HARVESTER
PROCÉDÉ DE RÉCOLTE DE CULTURES BATTUES ET DISPOSITIF CONÇU À CET EFFET POUR UNE MOISSONNEUSE

(30) Priorität: 02.11.2017 DE 102017125590
(43) Veröffentlichungstag der Anmeldung: 09.09.2020
(73) Patentinhaber: Kalverkamp Innovation GmbH, 49597 Rieste (DE)
(72) Erfinder: KALVERKAMP, Klemens, 49401 Damme (DE); KALVERKAMP, Felix, 49434 Vörden (DE)
(74) Vertreter: Bossmeyer, Jörg Peter
(86) Internationale Anmeldenummer: PCT/EP2018/079668
(87) Internationale Veröffentlichungsnummer: WO 2019/086430

(56) Entgegenhaltungen:
- EP-A1- 3 085 221
- DE-A1- 4 405 337
- DE-A1- 19 523 025
- DE-A1-102008 023 022
- DE-A1-102016 103 204

## Beschreibung

Die Erfindung ist auf ein Dreschverfahren zum Ernten von Druschfrüchten, insbesondere von Getreide als Erntegut gerichtet. Die dafür vorgesehene Vorrichtung basiert auf der entlang einer Ackerfläche erfolgenden Aufnahme des Erntegutes in einem Dreschaggregat, von dem aus Restbeimengungen abgeleitet werden, ein Korn-Spreu-Strom einer Endreinigung zugeführt wird und das insbesondere als Korn vorliegende Erntegut gesammelt wird.

Die EP 3 085 221 A1 offenbart ein Erntesystem mit einer selbstfahrenden Erntemaschine, insbesondere einem Mähdrescher, wobei die Erntemaschine mehrere Arbeitsorgane zum Verarbeiten des von einem Feld aufgenommenen Ernteguts und ein Fahrerassistenzsystem zur sensorgestützten Ansteuerung der Arbeitsorgane aufweist, welches einen Speicher zum Hinterlegen von Daten und eine Rechenvorrichtung zur Verarbeitung der in dem Speicher hinterlegten Daten umfasst, wobei ein Umfeldsensorsystem zur Erfassung mindestens einer den Ernteprozess beeinflussenden Umfeldinformation mit einem in der Umgebung der Erntemaschine befindlichen, räumlichen Geltungsbereich vorgesehen ist.

Der Einsatz von selbstfahrenden Mähdreschern ist seit langem bekannt, wobei Erntegut in Form von Getreide, Mais, Raps o. dgl. körnigen Früchten durch Dreschen von den Halmen getrennt und dabei Stroh und Spreu als Restbeimengungen aus dem System ausgeworfen werden. Bei einem Vorschlag gemäß DD 73 187 wird bereits eine Mäh- und Zuführeinrichtung für Erntegut genutzt, bei der zur Verbesserung der Ernteleistung zwei Schneidwerke im Bereich des Aufnahmevorgangs eingesetzt sind. Auch eine selbstfahrende Ausführung eines Mähdreschers gemäß DE 32 23 927 A1 ist auf eine mehrgliedrige Struktur gerichtet, wobei das Dreschwerk aus mindestens zwei Dresch- und Abscheidetrommeln besteht, die mit gleicher oder entgegengesetzter Förderrichtung eingesetzt werden können. Damit soll nach dem Sammeln des Korns die Aufnahme des ausgedroschenen Strohs aus dem abgelegten Schwad einfacher möglich sein.

Eine weitere Verbesserung dieses Systems wird gemäß DE 32 37 677 A1 erreicht, wobei ein modular aufzurüstendes Trägerfahrzeug vorgesehen ist, das im Bereich einer Drei-Punkt-Aufhängung das Axialdreschwerk, die Reinigungseinrichtung und die Schneidwerksmulde lösbar aufnehmen kann. Diese Komponenten des Systems müssen in jedem Falle im Bereich vor der vorderen Fahrachse des Mähdreschers angeordnet werden, um die Vorteile des auswechselbaren Dreschsystems zu nutzen.

Aus einer Veröffentlichung gemäß DD 209 562 ist ein Mähdrescher bekannt, der einen am Schneidwerk montierten Separator aufweist. Damit soll erreicht werden, dass der zur Verfügung stehende Einbauraum optimal genutzt werden kann und Wartungs- sowie Reparaturarbeiten unkomplizierter ausgeführt werden können. Das System zeichnet sich dadurch aus, dass in das Schneidwerk eine Längsflussdrehdrescheinheit einbezogen ist. Im Bereich der Aufnahmevorrichtung ist der Einsatz von zwei nebeneinander liegenden Separatoren vorgesehen. Damit wird die prinzipielle Ausführung einer das Erntegut entgegen der Fahrtrichtung aufnehmenden und in Längsrichtung nach hinten verlagernden Einheit deutlich. In jedem Falle wird das Stroh nach unten ausgefördert, und ausgehend von der vorgelagerte Druscheinheit kann das Korn-Spreu-Gemisch nach hinten in die entsprechende Trenn- und Siebeinheit verlagert werden.

Bei einer Weiterentwicklung der vorbeschriebenen Systeme gemäß einer Lösung in EP 0 392 189 B1 wird ein mit einem Trägerfahrzeug kombinierter Mähdrescher vorgeschlagen, wobei hier die unterhalb der Fahrerkabine und vor der vorderen Radachse befindliche Dresch- und Trenneinheit das Erntegut in Querrichtung erfasst und dann über Elevatoren in den Bereich einer nachgeordneten Satteleinheit verlagert.

Weitere landwirtschaftliche Erntemaschinen sind in EP 1 247 442 B1 und US 2006/0185340 A1 gezeigt, wobei hier mit auswechselbaren Baugruppen versehene Konstruktionen der jeweiligen Drescheinheit vorgeschlagen werden.

Aus DD 61886 ist ein selbstfahrender Mähdrescher bekannt, der ein fahrtrichtungsverstellbares Fahrgestell aufweist. Ausgehend von bekannten Mähdrescher-Typen ist hier vorgesehen, dass die Schneideinrichtung vor dem Kornbunker ausgerichtet ist und dabei die als bekanntes lineares System zusammenwirkenden Komponenten von Dresch- und Reinigungseinrichtungen oberhalb dieses Kornbunkers angeordnet werden. Auch bei dem Vorschlag gemäß DE 86 03 904 U1 wird ein oben liegendes System mit linear nachgeordneten Komponenten vorgeschlagen, wobei das geschnittene Getreide mittels eines Schrägförderers in den Bereich der Drescheinrichtung zugeführt wird und unter Wirkung der Schwerkraft eine an einem Bodenblech endende Separierung des Kornes mit anschließender separater Hochförderung vorgesehen ist.

Ausgehend vom Stand der Technik ist das erfindungsgemäße Dreschverfahren auf eine verbesserte Gutstromführung sowohl für die Druschfrüchte als auch für die Beimengungen gerichtet. Dabei soll die für eine mit geringem Aufwand von Arbeitsauf Straßenfahrt umrüstbare Erntemaschine geeignete Vorrichtung bei maximierbarer Arbeitsbreite kompakte Abmaße aufweisen, eine belastungsoptimale Positionierung einer Schneidwerks-Aufnahme am Fahrgestell ermöglichen und vergleichsweise kurze Gutströme sowohl zur Befüllung eines variablen Bunkervolumens als auch für die Ausleitung der Beimengungen realisieren.

Zur Lösung dieser Aufgabe wird ein aus den Ansprüchen 1 bis 6 ersichtliches Druschverfahren vorgeschlagen, und eine dafür vorgesehene Vorrichtung ist in den Ansprüchen 7 bis 15 aufgezeigt.

Ausgehend von den bekannten Dreschverfahren beim Ernten von Druschfrüchten wird das mit Halmen oder Stengeln erfasste Erntegut nach einer entgegen der Arbeitsfahrtrichtung erfolgenden Aufnahme einer Dreschphase zugeführt, während der eine entsprechende Aufbereitung des Erntegutes in Form von Druschfrüchten, Stroh und Spreu erfolgt. Dabei ist ein erzeugter Korn-Spreu-Strom einer Endreinigung zuzuführen, so dass an deren Ende von Restbeimengungen weitgehend freie Druschfrüchte in Form von Getreidekorn, Maiskorn o. dgl. gesammelt werden.

Die erfindungsgemäß verbesserte Verfahrensführung ist darauf gerichtet, dass während zumindest einer der an sich bekannten Endreinigung vorgelagerten Zuführphase dem zumindest einen Korn-Spreu-Strom eine von den bekannten "linearen" Verfahrensabläufen abweichende Transportbewegung vermittelt wird. Diese systemabhängig optimierbare Transportbewegung ist auf eine Strömungsführung gerichtet, die nunmehr eine Komponente in vertikaler Richtung und eine Komponente in Arbeitsrichtung aufweist. Damit wird - in Abgrenzung zu den bekannten "linearen" Systemen mit Transportbewegungen, die während bzw. am Ende des Dreschverfahrens eingeleitet werden - ein System realisiert, bei dem eine gezielte "Umlenkung" in den Ablauf des Verfahrens integriert wird. Auf Grundlage dieser Stromführung kann somit ein strukturell verbessertes Ernteaggregat realisiert werden.

Dabei ist vorgesehen, dass der in mehreren Phasen zu verlagernde Korn-Spreu-Strom mittels der erfindungsgemäßen Transportbewegungen unmittelbar anschließend an die Dreschphase auf engem Raum geführt und dabei ein "Hochfördern" in Fahrtrichtung genutzt wird. Aus dieser Verfahrensführung resultiert dann, dass damit eine in Arbeitsfahrtrichtung definierbare konstruktionsrelevante Länge des Fördersystems - und damit die Abmessungen der Vorrichtung - auf ein minimales Maß reduziert werden kann. Aus diesem Konzept folgt dann, dass ein in Arbeitsfahrtrichtung eine weitgehend variable Breite aufweisendes Ernte-Förder-System quer zur Arbeitsfahrtrichtung umgestellt werden kann und damit eine optimale Straßenfahrtrichtung des Systems definiert wird.

Nach dieser Positionierung in einer Umstell-Straßenfahrt-Richtung kann das die optimierte Korn-Spreu-Führung aufweisende System als kompakte Einheit im öffentlichen Verkehr eingesetzt und hier unter Einhaltung der Breitenabmessungen weitgehend autark bewegt werden.

Ausgehend von den vorbeschriebenen Grundüberlegungen ist das verbesserte Dreschverfahren darauf gerichtet, dass der von der - das Stroh bereits ausleitenden - Dreschphase hochzufördernde Korn-Spreu-Strom zum nachfolgenden Ausleiten der Spreu als Restbeimengung in einer oder mehreren Richtungen der Endreinigung zugeführt werden kann. Dabei wird der Korn-Spreu-Strom während der Reinigung in jeweiligen Bewegungsachsen in oder entgegen der Arbeitsfahrtrichtung geführt.

Die Ausgestaltung der jeweiligen Förderstufen der erfindungsgemäßen "umgelenkten" Transportbewegung sieht vor, dass das Korn des nunmehr in Relation zur Aufnahme- und Dreschphase hochgeförderten und während der Endreinigung aufgeteilten Korn-Spreu-Stromes in zumindest einen in Relation zum Aufnahmevorgang oben liegenden Sammelbehälter eingeleitet wird. Dabei ist vorgesehen, dass vor der Einleitung des Korns in den oben liegenden Sammelbehälter die Spreu in einer oder mehreren Transportphasen ausgeleitet wird. Unter Ausnutzung bekannter Verfahrensführungen ist in diesem Bereich vorgesehen, dass zum Trennen der Spreu aus dem Korn-Spreu-Strom eine Kombination von Windsichten und Sieben eingesetzt werden kann.

Eine Variante des erfindungsgemäß verbesserten Dreschverfahrens sieht vor, dass ausgehend von einer eine Schnittbreite mit mehreren Erntezeilen definierenden Mähbahn das Erntegut in zumindest zwei Teilmähbahnen erfasst werden kann. Danach wird das Erntegut in den Bereich separater Förder-, Dresch- und Separierstrecken eingeleitet. Diese mit an sich bekannten Aggregaten bestückbaren Strecken sind so angeordnet, dass das Erntegut in zwei Systemen weitgehend parallel weiterverarbeitet wird. Nach der Einleitung der erfindungsgemäßen hochfördernden Transportbewegung für den Korn-Spreu-Strom wird mittels einer Endreinigung das separierte Korn getrennt und für den Abtransport gesammelt.

Eine weitere Variante des Dreschverfahrens sieht vor, dass im Bereich der Teilmähbahnen abgeschnittenes Erntegut während der Aufnahme in das System jeweils in zwei quer zusammengeführten Teilförderströmen weitergeleitet, diese beiden Teilförderströme einem gemeinsamen Dreschvorgang zugeführt, danach zwei getrennte Förderströme in eine jeweilige Separierphase übergeleitet und hier sowohl eine Ausleitung der Beimengungen aktiviert wird als auch die Druschfrüchte mit Restbeimengungen gemäß dem Korn-Spreu-Strom der im System oben liegenden Endreinigung zugeführt werden.

Für das neue Dreschverfahren ist auch vorgesehen, dass die Separierung und Sammlung der Körner als Druschfrüchte mit einer sofortigen gezielten Ableitung der Restbeimengungen in Form von Stroh und Spreu kombiniert wird. Die internen Abläufe sind darauf gerichtet, dass sämtliche mit den beiden Teilmähbahnen aufgenommenen Beimengungen bodennah ausgeleitet und weitgehend gleichmäßig auf einer abgeernteten Ackerfläche verteilt werden können.

Die Verfahrensführung ist in ihrer räumlichen Ausrichtung darauf abgestellt, dass die Druschfrüchte mit den Restbeimengungen als ein kompakter Korn-Spreu-Strom in einen Bereich oberhalb der Aufnahme hochgefördert und hier die letzte Verfahrensstufe der Separierung als Endreinigung durchgeführt wird. Eine verfahrenstechnisch optimale Zuordnung dieser Komponenten sieht vor, dass die erfindungsgemäße Aufnahme des Erntegutes einen Bereich umfasst, der in Bezug auf die Stütz- und Fahrachse des Systems hinter dieser Achse definiert wird. Damit kann eine kompakte Hochförderung in einem vorteilhaft zentralen Wirkbereich des Systems erreicht werden.

Zur Durchführung des erfindungsgemäßen Verfahrens ist eine konzeptionell verbesserte Kombination von Einzelbaugruppen vorgesehen, die in einer neuartigen Vorrichtung zusammengefasst sind. Diese geht von einem Schneidwerk als Aufnahme für das Erntegut aus, das dann in ein an sich bekanntes Druschaggregat eingezogen wird. Ein dabei erzeugter Korn-Spreu-Strom kann dann über eine Endreinigung so separiert werden, dass das Erntegut in Form von Korn einem Sammelbunker zuführbar ist.

Die erfindungsgemäße Weiterentwicklung dieser mehrgliedrigen Vorrichtung sieht vor, dass nunmehr das Druschaggregat zur Aufnahme des aus diesem ausgeleiteten Korn-Spreu-Stromes mit einem diesen umlenkenden und eine in Bezug zum Druschaggregat nach oben gerichtete Förderstrecke definierenden Hochförderer zusammenwirkt. Ausgehend von dieser Grundüberlegung mit einer gezielten Förderstrom-Umlenkung wird erreicht, dass der Korn-Spreu-Strom zumindest phasenweise eine eine Komponente in vertikaler Richtung und eine Komponente in Arbeitsfahrtrichtung - die der Feldfahrtrichtung entspricht - aufweisende Transportbewegung aufweist.

Die weitere Optimierung der Vorrichtung sieht vor, dass an dem zumindest einen Dreschaggregat auch mehrere Hochförderer vorgesehen sein können. Entsprechend der weiteren Bearbeitung des Korn-Spreu-Stromes wirken der bzw. die Hochförderer am jeweiligen Aufnahmeende bzw. Ausförderende mit zumindest einem Querförderer zusammen. Damit wird ausgehend von den Dreschaggregaten eine optimale Stromverteilung im Sinne einer kompakten Befüllung des Hochförderers und einer anschließenden Verteilung bei der Überleitung in die Endreinigungsphase erreicht.

Eine optimale Verbesserung der Vorrichtung mit Blick auf eine Steigerung der Ernteleistung sieht vor, dass dem die Mähbahn aufnehmenden Schneidwerk zwei im Wesentlichen synchron nebeneinander wirksame Dreschaggregate mit dem zumindest einen Hochförderer zugeordnet sind. Damit wird erreicht, dass eine im Vergleich mit bekannten Mähdreschern eine größere Schnittbreite definierende und zumindest gleich große Mähbahn in Arbeitsfahrtrichtung aufgenommen wird. In Kombination mit der die erfindungsgemäße Transportbewegung aufweisenden Verfahrensführung wird nunmehr die Vorrichtung so verbessert, dass die jeweiligen Mähbahnen über einen vergleichsweise kürzeren Förderweg den einzelnen Baugruppen des Systems zugeführt werden können. Damit wird bei Steigerung der Dreschleistung auch eine optimale Qualität für die Druschfrüchte erreichbar.

Eine kostenoptimale Umsetzung des verbesserten Vorrichtungs-Konzeptes sieht vor, dass die beiden Dreschaggregate mit bekannten Baugruppen zum Sieben, Separieren und Sammeln der Druschfrüchte versehen sind. Dabei sind im Bereich eines oder mehrerer Hochförderer jeweilige Baugruppen zum Behandeln und Ableiten von Stroh sowie Spreu so wirksam, dass diese Beimengungen mit Blick auf die maschineninternen Transportbewegungen im bodennahen Bereich separiert werden und schnell ausleitbar sind.

Die komplexe Gestaltung der Vorrichtung sieht vor, dass die Zwei-Dreschaggregate-Kombination mit den zugehörigen Baugruppen auch als autarke Einheit in variierende Basisstrukturen so integrierbar ist, dass variable Ausführungen von auf Arbeitsfahrtrichtung und Straßenfahrtrichtung umrüstbaren Systemträgern die vorteilhafte Ausführung der kompakten Hochförderer-Separierung nutzen können.

Die weitere Ausgestaltung der Vorrichtung sieht vor, dass im Bereich des den hochzufördernden Korn-Spreu-Strom erfassenden Hochförderers zumindest ein das zuströmende Gemisch im Bereich der Endreinigung erfassender Querförderer zur Beschickung eines Bunkers o. dgl. vorgesehen ist. Dieser Querförderer ist so konzipiert, dass im Bereich des aus der Hochförderphase der Endreinigung zugeführten Korn-Spreu-Stromes eine weitgehend konstante Gemischdicke zur Separierung bereitgestellt wird.

Der am auslassseitigen Ende des zumindest einen Hochförderers vorgesehene Querförderer ist dabei mit einer das zuströmende Gemisch axial in einem Verteilrohr verlagernden Förderschnecke versehen. Diese ist so angeordnet, dass in einer Wirkrichtung verlagerte Teilmengen des Gemisches einerseits durch einen bodenseitigen Axialschlitz ausgefördert und andererseits in Förderrichtung verlagerte Teilmengen einer Füllstandsdetektierung zugeführt werden können. Dieses System ist so ausgerichtet, dass ein im Wesentlichen konstanter Auslassstrom durch den Axialschlitz in den Bereich der Endreinigung gelangt.

Für eine besonders effiziente Steuerung dieser gleichmäßigen Zuführung des Gemisches ist vorgesehen, dass die Füllstandsdetektierung mit zumindest einer unterhalb des Axialschlitzes rotierenden Beschleunigungswalze zusammenwirkt und mit deren einstellbarer Abstandsänderung im Bereich des Axialschlitzes die jeweilige Gutverteilung steuerbar ist.

Eine optimale Ausführung dieses Querförderers sieht vor, dass im Bereich unterhalb des Axialschlitzes zwei gegensinnig umlaufende Beschleunigungswalzen vorgesehen sind und damit ein zwischen diesen erfasstes Volumen des Gemisches mittels einer durch die Füllstansdetektierung beeinflussbaren Abstandsänderung der beiden Beschleunigungswalzen veränderbar ist. Für den Fall, dass beispielsweise ein Gemisch-Stau im Nahbereich des Füllstandsdetektors auftritt, wird diese "Drucksituation" erfasst und durch eine Vergrößerung des Axialschlitzes durch Abstandsverstellung der Beschleunigungswalzen die kontinuierliche Verteilsituation weiterhin gewährleistet.

Mit Blick auf die Größe des Gesamtsystems ist vorgesehen, dass der Querförderer im Bereich des Verteilrohres auch zwei endseitige Zufördereingänge aufweisen kann. Daraus resultiert, dass von diesen Zufördereingängen aus jeweils eine Förderschnecke das Gemisch zur Rohrmitte hin verlagert und in diesem Bereich die Füllstandsdetektierung angeordnet ist.

Eine vorteilhafte Weiterentwicklung der Vorrichtung mit den Merkmalen der Ansprüche 7 bis 15 zur Durchführung des Verfahrens gemäß Anspruch 1 bis 6 sieht vor, dass die zumindest eine Aufnahme und das zumindest eine nachgeordnete Druschaggregat mit den zugehörigen Baugruppen im Bereich eines in Draufsicht im Wesentlichen U-förmig gestaltbaren und mit jeweiligen randseitigen Bodenabstützungen sowohl auf einem Feld als auch im Straßenverkehr fahrbeweglich ausrichtbaren Funktionsrahmens angeordnet sind. In dieses Zwei-Stellungen-System mit Dreschvorrichtung kann dann der zumindest eine mit einem oberen Sieborgan sowie einem Sammelbunker zusammenwirkende Hochförderer integriert werden.

Das Konzept des in Draufsicht U-förmigen Funktionsrahmens ermöglicht eine besonders vorteilhafte Gestaltung im Bereich der Bodenabstützungen. Diese sind so angeordnet, dass zumindest das Schneidwerk des Systems in Arbeitsfahrtrichtung zumindest bereichsweise hinter jeweiligen vorlaufenden Rad- und/oder Radteilen der Bodenabstützung mit dem Funktionsrahmen verbunden sind. Die konstruktive Ausführung sieht außerdem vor, dass in dem Funktionsrahmen vorteilhaft an sich bekannte Schneid-, Dresch-, Separier- und Förderkomponenten als modulare Baugruppen verwendet werden können und so anwendungsspezifische Ausführungen der fahrbaren Dresch-Sammel-Vorrichtung bereitstellbar sind.

Mit Blick auf die komplexe Nutzung der Vorrichtung versteht es sich, dass diese mit einer oder mehreren Antriebskomponenten versehen sein kann und dabei sowohl deren Steuerung als auch die Steuerung komplexer Fahrbewegungen über entsprechende programmierbare Steuereinheiten zu regeln ist.

Es hat sich gezeigt, dass das erfindungsgemäße System optimal in den U-förmigen Funktionsrahmen dann integriert werden kann, wenn kompakte Aggregate verwendet werden. Dabei ist vorgesehen, dass dem die Mähbahn aufnehmenden Schneidwerk nur ein im Wesentlichen zentral und spiegelbildlich zur Längsmittelebene des Systems angeordnetes Dreschaggregat zugeordnet wird. Damit wird der verfügbare Bauraum besser genutzt, und die Konstruktion im Bereich der zur Aufhängung vorgesehenen Verbindungskomponenten kann verbessert werden. Es versteht sich, dass auch dieses zentrale Dreschaggregat vorteilhaft mit zwei seitlichen Hochförderern versehen sein kann.

Auch die Konstruktion im Bereich des zumindest einen oben liegenden Querförderers zur Aufbereitung des Korn-Spreu-Gemisches kann weiter optimiert werden. Dabei ist vorgesehen, dass der am auslassseitigen Ende des jeweiligen Hochförderers vorgesehene Querförderer nunmehr (im Unterschied zu dem vorbeschriebenen Rohrförderer) von zumindest einem die Endreinigung vorbereitenden Querschwingförderer gebildet ist. Mit dieser Aufnahme des Gemisches aus den Hochförderern wird nunmehr erreicht, dass eine erste Phase des Sieb- und Sichtvorganges eingeleitet wird. Mit dem Querschwingförderer wird erreicht, dass gleichmäßige Förderlagen von unten liegendem Korn und oben liegender Spreu aufbereitet werden und damit der Windsichtvorgang optimiert werden kann.

Dabei ist vorgesehen, dass die vom jeweiligen Querschwingförderer abgeleiteten zweischichtigen Förderlagen mittels zumindest eines Querluftstromes beeinflussbar sind. Bereits in dieser Förderphase wird eine effektive Durchführung des Windsichtens im Bereich oberhalb zumindest einer Separierfläche eingeleitet. Dazu ist vorgesehen, dass die jeweiligen Querschwingförderer mit zumindest einer unterhalb von diesen angeordneten Fangplatte zusammenwirken. Von dieser aus werden die "erzeugten" Förderlagen zu zumindest einer weiteren, mit einer Fallstufe beabstandeten unteren Separierfläche hin verlagert. Es versteht sich, dass dabei zumindest im Bereich dieser Fallstufe eine Separierung mittels Windsichten eingeleitet werden kann. In optimierter Ausführung ist vorgesehen, dass dann die Förderung über eine zweite Fallstufe erfolgt und danach sauberes Korn in den unteren Siebkasten gelangt. In jeder der beiden Fallstufen kann mittels jeweiliger, auch einzeln zuschaltbarer Querluftströme ein steuerbarer Windsichtvorgang realisiert werden.

Die Erfindung betrifft, insbesondere somit, bevorzugt das oder ein Dreschverfahren zum Ernten von Druschfrüchten, wobei diese von einem insbesondere in Form von Getreide aufzunehmenden Erntegut getrennt, dieses nach einem entgegen einer Arbeitsfahrtrichtung erfolgenden Aufnahmevorgang einer Dreschphase zugeführt und während dieser das Erntegut als die jeweiligen Druschfrüchte sowie die Beimengungen in Form von Stroh und Spreu aufbereitet werden, insbesondere derart, dass wesentliche ausleitbare Beimengungen von den Druschfrüchten separiert, diese als ein Gemisch mit Spreu o. dgl. Feinteilen als Korn-Spreu-Strom einer Endreinigung zugeführt und danach die von diesen Restbeimengungen freien Körner als Druschfrüchte gesammelt werden. Das Dreschverfahren ist insbesondere dadurch weitergebildet, dass während zumindest einer der Endreinigung vorgelagerten Zuführphase dem zumindest einen Korn-Spreu-Strom eine eine Komponente in vertikaler Richtung und eine Komponente in Arbeitsfahrtrichtung aufweisende Transportbewegung vermittelt wird.

Das Dreschverfahren ist vorzugsweise derart weitergebildet, dass der zu einer oberen Endreinigung hin in mehreren Phasen zu verlagernde Korn-Spreu-Strom mittels der Transportbewegungen auf engem Raum geführt wird und damit eine in Arbeitsfahrtrichtung definierbare Länge des Dresch- und Fördersystems minimiert werden kann, insbesondere derart, dass ein in Arbeitsfahrtrichtung eine weitgehend variable Arbeitsbreite aufweisendes Ernte-Förder-System nach einer quer zur Arbeitsfahrtrichtung erfolgenden Umstellung in Form einer Fahreinstellung so positionierbar ist, dass in einer damit definierten Straßenfahrtrichtung dieses System weitgehend autark im öffentlichen Verkehr bewegt werden kann.

Das Dreschverfahren ist vorteilhaft derart weitergebildet, dass der ausgehend von der Dreschphase mit der nachfolgenden Transportbewegung hochzufördernde Korn-Spreu-Strom zum Ausleiten der Spreu in einer oder mehreren Richtung(en) der Endreinigung zugeführt wird und dabei der Korn-Spreu-Strom während der Reinigung in jeweiligen Bewegungsachsen in oder entgegen der Arbeitsfahrtrichtung geführt wird.

Bevorzugt wird das Korn des hochgeförderten und während der Endreinigung aufgeteilten Korn-Spreu-Stromes in zumindest einen in Relation zum Aufnahme- und Dreschvorgang oben liegenden Sammelbehälter eingeleitet.

Vorzugsweise wird vor der Einleitung des Kornes in den oben liegenden Sammelbehälter die Spreu in einer oder mehreren Trennphase(n) ausgeleitet.

Vorteilhaft wird zum Trennen der Spreu aus dem Korn-Spreu-Strom eine Kombination von Windsichten und Sieben eingesetzt.

Das Dreschverfahren ist bevorzugt derart weitergebildet, dass ausgehend von einer eine Schnittbreite mit mehreren Erntezeilen definierenden Mähbahn das Erntegut in zumindest zwei Teilmähbahnen erfasst, danach diese in den Bereich separater Förder-, Dresch- und Separierstrecken eingeleitet, dabei das Erntegut in zwei Systemen weitgehend parallel weiterverarbeitet und nach einer hochfördernden Transportbewegung von Korn und Spreu mittels anschließender Endreinigung das Korn separiert und gesammelt wird.

Das Dreschverfahren ist vorzugsweise derart weitergebildet, dass im Bereich der Teilmähbahnen abgeschnittenes Erntegut jeweils in zwei quer zusammengeführten Teilförderströmen weitergeleitet, diese beiden Teilförderströme jeweils gemeinsam einem Dreschvorgang zugeführt, danach zwei getrennte Förderströme in eine jeweilige Separierphase übergeleitet und hier sowohl eine Ausleitung der Beimengungen aktiviert wird als auch die Druschfrüchte mit Restbeimengungen gemäß dem Korn-Spreu-Strom einer im System oben liegenden Endreinigung zugeführt werden.

Vorteilhaft ist die Separierung und Sammlung der Körner als Druschfrüchte im Nahbereich der Aufnahme auf eine sofortige Ableitung der Restbeimengungen in Form von Stroh und Spreu gerichtet, insbesondere derart, dass sämtliche mit den beiden Teilmähbahnen aufgenommenen Beimengungen weitgehend gleichmäßig auf einer abgeernteten Ackerfläche verteilt werden.

Das Dreschverfahren ist bevorzugt derart weitergebildet dass die Druschfrüchte mit den Restbeimengungen als Korn-Spreu-Strom in einen Bereich oberhalb der Aufnahme hochgefördert und hier die letzte Stufe der Separierung als Endreinigung durchgeführt wird.

Die Erfindung betrifft vorzugsweise ferner die oder eine Vorrichtung, insbesondere zur Durchführung des vorgenannten Verfahrens, wobei das von einem Schneidwerk o. dgl. Aufnahme zugeführte Erntegut in ein Dreschaggregat eingezogen wird, aus diesem Stroh sowie ein Korn-Spreu-Strom abgeschieden werden und nach dessen Endreinigung das Korn einem Sammelbunker zuführbar ist. Die Vorrichtung ist insbesondere dadurch weitergebildet, dass das Dreschaggregat zur Aufnahme des aus diesem ausgeleiteten Korn-Spreu-Stroms mit einem diesen umlenkenden und eine in Bezug zum Dreschaggregat nach oben gerichtete Förderstrecke definierenden Hochförderer zusammenwirkt, insbesondere derart, dass der Korn-Spreu-Strom zumindest phasenweise eine eine Komponente in vertikaler Richtung und eine Komponente in Arbeitsfahrtrichtung aufweisende Transportbewegung aufweist.

Vorteilhaft ist oder sind an dem zumindest einen bodennah angeordneten Dreschaggregat ein oder mehrere Hochförderer vorgesehen.

Bevorzugt wirkt oder wirken der oder die Hochförderer mit zumindest einem Querförderer zusammen.

Vorzugsweise sind dem die Mähbahn aufnehmenden Schneidwerk zwei im Wesentlichen parallel nebeneinander wirksame Dreschaggregate mit zumindest einem Hochförderer zugeordnet, insbesondere derart, dass eine im Vergleich mit bekannten Mähdreschern eine größere Arbeitsbreite definierende oder zumindest gleich große Mähbahn aufnehmbar ist, insbesondere derart, dass nunmehr das Erntegut über vergleichsweise kürzere Förderwege dem System zuführbar und in diesem verarbeitbar ist.

Die Vorrichtung ist vorteilhaft dadurch weitergebildet, dass die beiden Dreschaggregate mit bekannten Baugruppen zum Sieben, Separieren und Sammeln der Druschfrüchte versehen sind und dabei im Bereich eines oder mehrerer Hochförderer Baugruppen zum Behandeln und Ableiten von Stroh sowie Spreu wirksam sind.

Bevorzugt ist das insbesondere eine Zwei-Dreschaggregate-Kombination bildende Dreschaggregat als autarke Einheit in variierende Basisstrukturen als Systemträger integrierbar.

Vorzugsweise ist im Bereich des den hochzufördernden Korn-Spreu-Strom erfassenden Hochförderers zumindest ein das zuströmende Gemisch im Bereich vor der Endreinigung erfassender Querförderer vorgesehen, insbesondere derart, dass im Bereich des aus der Hochförderphase der Endreinigung zugeführten Korn-Spreu-Stromes eine weitgehend konstante Gemischdicke (33) zur Separierung bereitstellbar ist.

Die Vorrichtung ist vorteilhaft dadurch weitergebildet, der am auslassseitigen Ende des Hochförderers vorgesehene Querförderer mit zumindest einer das zuströmende Gemisch axial in einem Verteilrohr verlagernden Förderschnecke versehen ist, mit der im Verteilrohr verlagerte Teilmengen des den Korn-Spreu-Strom bildenden Gemisches einerseits durch einen bodenseitigen Axialschlitz ausgefördert und andererseits in Förderrichtung einer Füllstandsdetektierung zugeführt werden, wobei diese mit zumindest einer unterhalb des Axialschlitzes rotierenden Beschleunigungswalze so zusammenwirkt, dass mit deren Abstandsänderung im Bereich des Axialschlitzes die Gutverteilung steuerbar ist.

Die Vorrichtung ist bevorzugt dadurch weitergebildet, dass im Bereich unterhalb des Axialschlitzes zwei gegensinnig umlaufende Beschleunigungswalzen vorgesehen sind und ein zwischen diesen erfasstes Volumen des Gemisches mittels einer durch die Füllstandsdetektierung beeinflussbaren Abstandsänderung der beiden Beschleunigungswalzen veränderbar ist.

Die Vorrichtung ist vorzugsweise dadurch weitergebildet, dass der Querförderer im Bereich des Verteilrohres zwei endseitige Zufördereingänge aufweist, von diesen jeweils eine Förderschnecke das Gemisch zur Rohrmitte hin verlagert, sich in diesem Bereich eine entsprechende Füllkurve aufbaut und diese mit der regelbaren Füllstandsdetektierung erfassbar ist.

Vorteilhaft ist dem die Mähbahn aufnehmenden Schneidwerk ein im Wesentlichen zentral und spiegelbildlich zur Längsmittelebene des Systems angeordnetes Dreschaggregat zugeordnet.

Bevorzugt ist der am auslassseitigen Ende der oder des Hochförderer(s) vorgesehene Querförderer von zumindest einem die Endreinigung vorbereitenden Querschwingförderer gebildet, insbesondere derart, dass damit eine erste Phase eines Sieb- und Sichtvorganges mit gleichmäßigen Förderlagen von unten liegendem Korn und oben liegender Spreu erreichbar ist.

Vorzugsweise sind die vom jeweiligen Querschwingförderer abgeleiteten zweischichtigen Förderlagen mittels zumindest eines Querluftstromes beeinflussbar, insbesondere derart, dass eine effektivere Phase des Windsichtens im Bereich oberhalb zumindest einer Separierfläche einleitbar ist.

Die Vorrichtung ist vorteilhaft dadurch weitergebildet, dass die jeweiligen Querschwingförderer mit zumindest einer unterhalb von diesen angeordneten Fangplatte zusammenwirken, von dieser aus die Förderlagen zu zumindest einer mit einer Fallstufe beabstandeten unteren Separierfläche hin verlagerbar sind und dabei zumindest im Bereich dieser Fallstufe eine Separierung mittels des Windsichtens vorgesehen ist, insbesondere derart, dass weitgehend sauberes Korn über eine zweite Fallstufe in einen unteren Siebkasten gelangt.

Aus einer Beschreibung anhand entsprechender Zeichnungen ergeben sich nunmehr weitere erfindungsgemäße Einzelheiten und Vorteile des Verfahrens und der Vorrichtung zum Ernten von Druschfrüchten. Es sind in entsprechenden Zeichnungen dargestellt:
- Fig. 1: eine Prinzipdarstellung einer erfindungsgemäßen Vorrichtung in einer gemäß Linie II-II geschnittenen Seitenansicht mit den erfindungsgemäßen Verfahrensablauf verdeutlichenden Baugruppen,
- Fig. 2: eine Perspektivdarstellung der Vorrichtung ähnlich Fig. 1 mit zwei Dreschaggregaten und diesen zugeordneten Baugruppen,
- Fig. 3: eine Vorderansicht des Systems gemäß Fig. 2,
- Fig. 4: eine Draufsicht des Systems gemäß Fig. 2 ohne obere Siebbaugruppe und Sammelbunker,
- Fig. 5: eine Perspektivdarstellung ähnlich Fig. 2 mit in einen U-förmigen Funktionsrahmen mit seitlichen Bodenabstützungen integrierten Dresch- und Separierbaugruppen,
- Fig. 6: eine Draufsicht des fahrbaren Systems gemäß Fig. 5,
- Fig. 7: eine Seitenansicht des die verlagerbaren Bodenabstützungen in Arbeitsfahrtrichtung aufweisenden Systems gemäß Fig. 5,
- Fig. 8: eine Prinzipdarstellung eines zwischen den beiden Sammelbunkern des Systems im Bereich von zwei Hochförderern vorgesehenen Querförderers,
- Fig. 9: eine Schnittdarstellung gemäß einer Linie I-I in Fig. 8,
- Fig. 10: eine Vorderansicht des Systems ähnlich Fig. 3 mit nur einem zentralen Dreschaggregat,
- Fig. 11: eine Draufsicht des Systems ähnlich Fig. 3 im Bereich der oberen Endreinigung mit jeweiligen Querschwingförderern,
- Fig. 12: eine Perspektivdarstellung des Systems gemäß Fig. 11, und
- Fig. 13: eine Querschnittsdarstellung des Systems gemäß einer Linie XIII-XIII in Fig. 12.

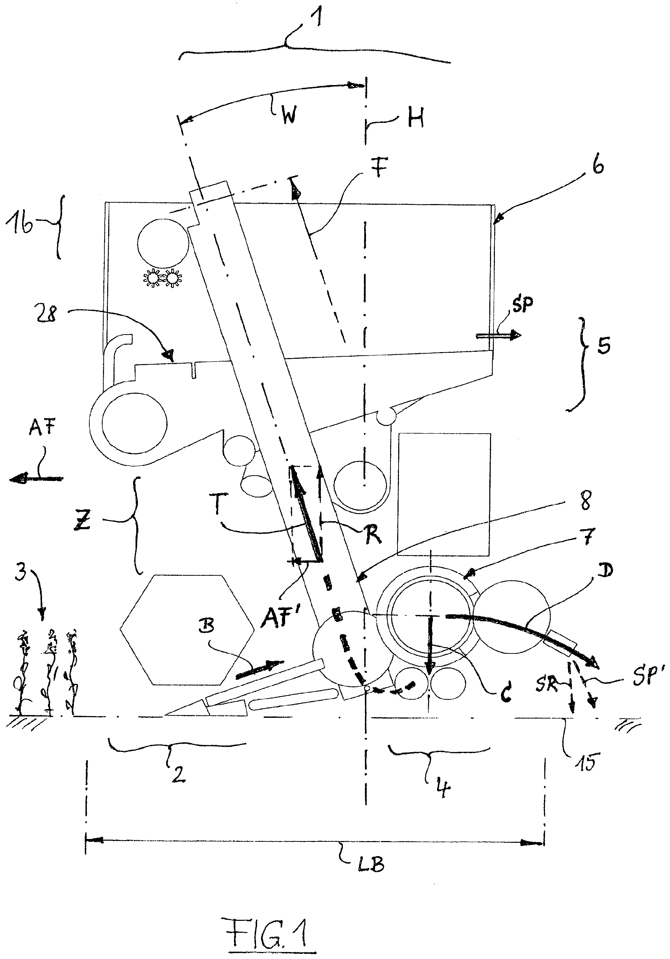

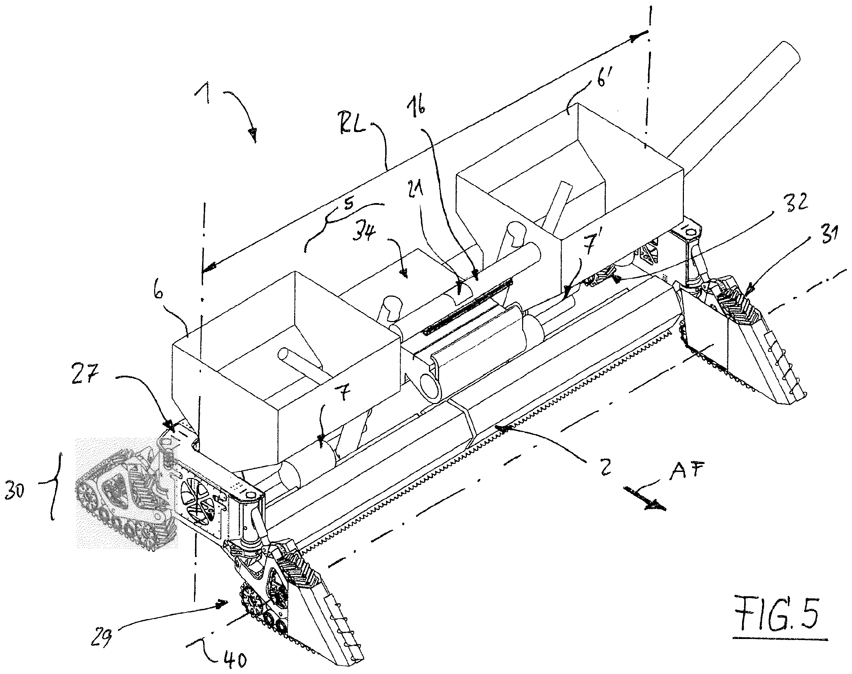

Aus einer Analyse der in Fig. 1 dargestellten Grundkomponenten einer als fahrbare Ernte-Konstruktion (Fig. 5 bis Fig. 6) einsetzbaren Vorrichtung 1 ergeben sich die wesentlichen Aspekte des dabei vorgesehenen, neu gestalteten Dreschverfahrens sowie eine dazu denkbare Komponenten-Kombination für die variabel gestaltbare Vorrichtung 1.

Diese Vorrichtung 1 ist dabei mit einem Schneidwerk o. dgl. Aufnahme 2 versehen, mit dem ein in Form von Getreide, Mais o. dgl. aufzunehmendes Erntegut 3 entgegen einer Arbeitsfahrtrichtung AF einer Dreschphase 4 zugeführt wird (Pfeil B). Während der Dreschphase 4 wird das insbesondere aus den geschnittenen Halmen und Ähren bestehende Erntegut 3 so aufbereitet, dass jeweilige Druschfrüchte sowie Beimengungen in Form von Stroh und Spreu weiterverarbeitet werden können. Mit einem Pfeil C ist in Fig. 1 die prinzipielle Richtung einer Bildung und Ausleitung eines Korn-Spreu-Stromes im Bereich der Dreschphase 4 dargestellt. Mit einem Pfeil D ist eine unmittelbare, vorzugsweise bodennahe Ausleitung von in dieser ersten Phase der Separierung abgezweigten Beimengungen in Form von Stroh und Spreu verdeutlicht.

An diese an sich bekannte Aufbereitung und Separierung von Erntegut 3 in der Druschphase 4 schließt sich eine insgesamt mit 5 bezeichnete Endreinigung an, in der das in Pfeilrichtung C aus der Dreschphase 4 ausgeleitete Gemisch in Form des Korn-Spreu-Stromes gelockert und die Restbeimengungen so von den Druschfrüchten getrennt werden, dass danach deren Sammlung in Form von Korn in einem Sammelbunker 6 möglich ist.

Ausgehend von diesen zum Ernten von Druschfrüchten allgemein eingesetzten Abläufen zeichnet sich das erfindungsgemäß konzipierte Dreschverfahren dadurch aus, dass nunmehr während zumindest einer der Endreinigung 5 vorgelagerten Zuführphase Z dem zumindest einen Korn-Spreu-Strom gemäß Pfeil C eine eine Komponente in vertikaler Richtung R und eine Komponente in Arbeitsfahrrichtung AF' aufweisende Transportbewegung (Pfeil T) vermittelt wird (Vektordarstellung in Fig. 1, mittig).

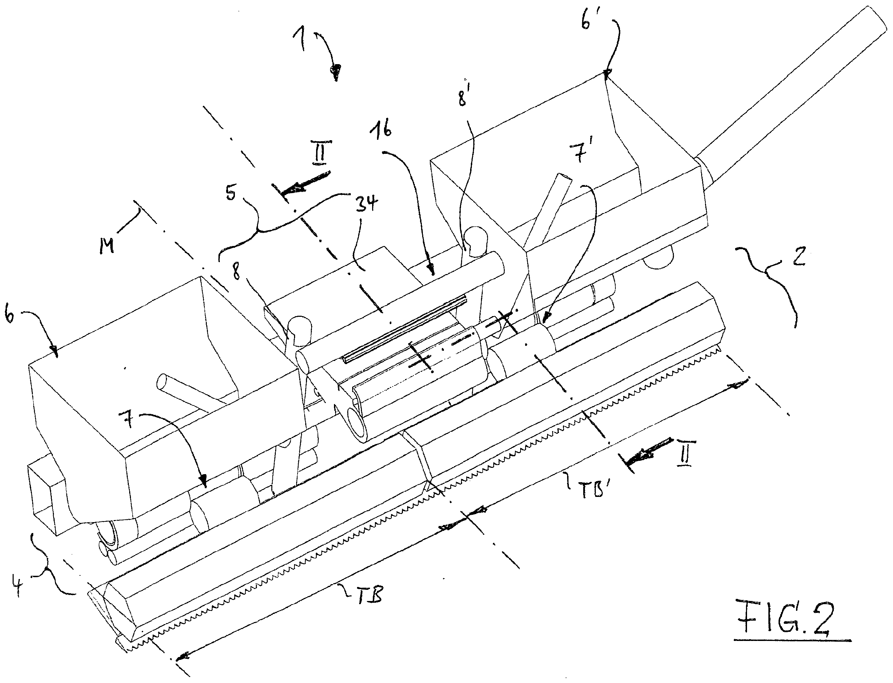

Aus der konstruktiven Umsetzung dieses Verfahrensprinzips in der zugehörigen Ausführung der Vorrichtung 1 - gemäß den Darstellungen Fig. 2 bis 7 - wird deutlich, dass das Dreschaggregat 7 zur Aufnahme des aus diesem ausgeleiteten Korn-Spreu-Stromes C mit einem diesen umlenkenden und eine - in Bezug zum Druschaggregat 7 - nach oben gerichtete Förderstrecke F definierenden Hochförderer 8 zusammenwirkt. Damit wird eine Verfahrensführung realisiert, bei der die nach oben gerichtete Transportbewegung T - ausgehend von der vertikalen Hochachse H (als eine theoretische Grenze) - im Bereich eines zur Arbeitsfahrtrichtung AF variablen Richtungswinkels W jeweils optimal ausgerichtet werden kann.

Damit wird eine überraschend effiziente Verbesserung in den an sich bekannten Ablauf von Druschverfahren integriert, wobei dieser sich dadurch auszeichnet, dass der auch in mehreren Phasen zu verlagernde Korn-Spreu-Strom C mittels der neu definierten Transportbewegung T auf einem besonders vorteilhaften engen Raum geführt werden kann. Daraus resultiert, dass eine in Arbeitsfahrtrichtung AF definierbare Länge LD des die Vorrichtung 1 bildenden Dresch- und Fördersystems auf ein minimales Maß reduziert werden kann.

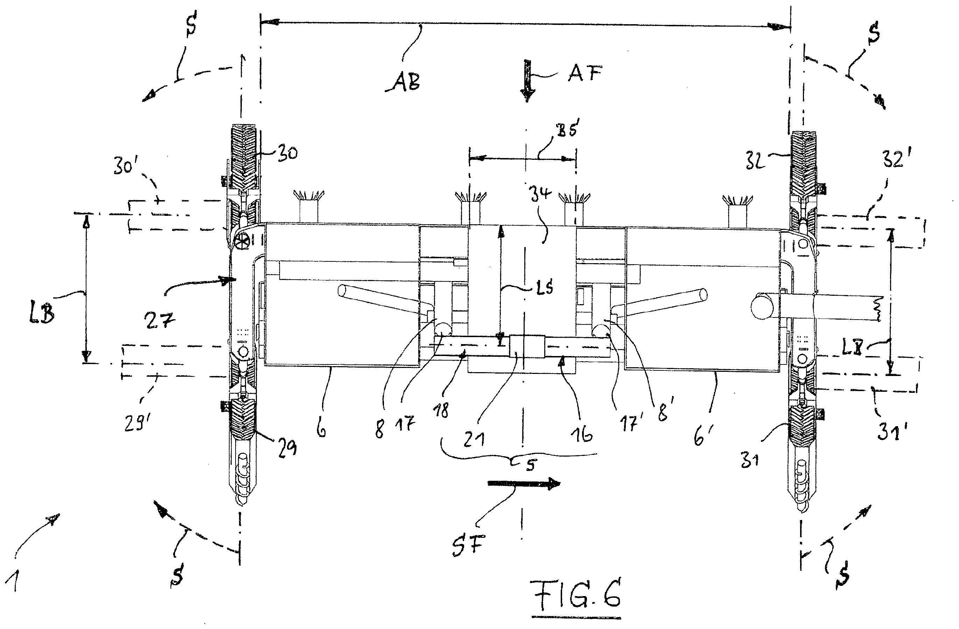

Mit Blick auf das Gesamtsystem nach Art eines "Mähdreschers" wird damit erreicht, dass nunmehr ein in Arbeitsfahrtrichtung AF eine weitgehend variable Breite AB (Fig. 6) aufweisendes Ernte-Förder-System 1 (Fig. 2) nach einer quer zur Arbeitsfahrtrichtung AF erfolgenden Umstellung der jeweiligen randseitigen Bodenabstützungen 29, 30, 31, 32 (Fig. 6, Schwenkwinkel S) in einer damit definierten Straßenfahrtrichtung SF positioniert wird. In dieser Fahrtrichtung sind die Bodenabstützungen mit 29', 30', 31' und 32' bezeichnet. Damit kann das gesamte System als weitgehend autarke Einheit auch im öffentlichen Verkehr bewegt werden, da die mögliche Straßenfahrbreite mit dem als Länge LD des Systems definierten Maß eingehalten werden kann.

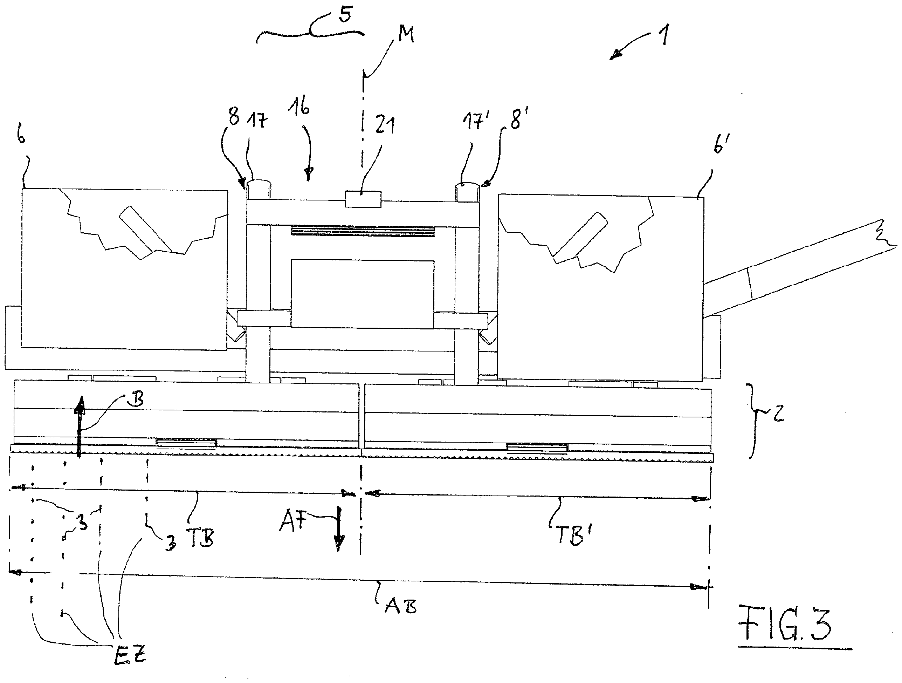

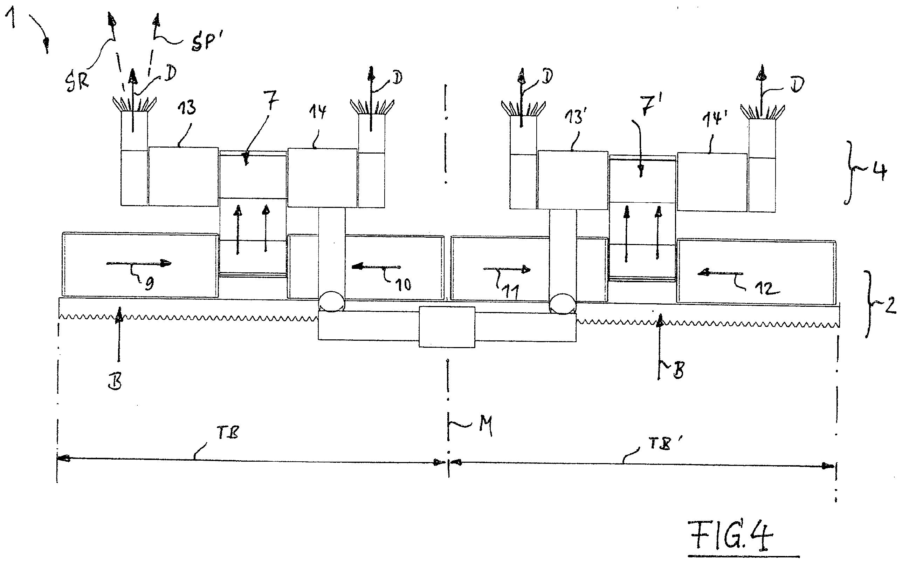

Das konstruktiv variabel ausführbare Konzept des Dreschverfahrens (Fig. 2 bis Fig. 4) sieht eine auf hohe Ertragsleistungen gerichtete Erweiterung der Konstruktion vor. Das in Fig. 1 gezeigte Prinzip wird auch dann realisiert, wenn ausgehend von der als eine Schnittbreite definierbaren Breite AB - die mehrere Erntezeilen EZ (Fig. 3) als Mähbahn aufweist - das Erntegut 3 in zumindest zwei Teilmähbahnen TB erfasst werden kann. Ausgehend von Fig. 2 zeigen die Ansichten gemäß Fig. 3 und 4 die jeweilige Verfahrensführung, wobei die beiden Teilmähbahnen TB und TB' in den Bereich separater Förder-, Dresch- und Separierstrecken eingeleitet werden. Bei dieser "doppelten" Ernteleistung kann das Erntegut 3 in zwei Systemen weitgehend parallel bzw. synchron weiterverarbeitet werden. Dabei ist denkbar, die Korn-Spreu-Ströme zusammenzufassen und nach einer hier gemeinsamen hochfördernden Transportbewegung T mittels Endreinigung 5 das separierte Korn in zwei Sammelbunkern 6, 6' zu erfassen.

Dabei ist denkbar, dass der jeweils ausgehend von der Dreschphase 4 hochzufördernde Korn-Spreu-Strom C zum oben liegenden Ausleiten der Spreu in einer oder mehreren Förderrichtungen der Endreinigung 5 zugeführt wird. Es ist vorgesehen, dass der Korn-Spreu-Strom während der Phase der Reinigung wahlweise in jeweiligen Bewegungsachsen in oder entgegen der Arbeitsfahrtrichtung AF verlagert werden kann.

Von funktionaler Bedeutung ist dabei, dass das Korn des hochgeförderten und während der Endreinigung 5 aufgeteilten Korn-Spreu-Stromes C in zumindest einen in Relation zum Aufnahmevorgang B oben liegenden Sammelbehälter 6, 6', Bunker o. dgl. eingeleitet wird. Vor dieser Einleitung des Korns in den oben liegenden Sammelbehälter 6, 6' (Fig. 1 bis Fig. 3) wird die Spreu in einer oder mehreren Trennphasen durch einen Blasvorgang o. dgl. ausgeleitet (Pfeil SP). Es hat sich gezeigt, dass in dieser zweiten Phase des Separierens, nämlich zum Trennen der Spreu SP aus dem Korn-Spreu-Strom C, vorteilhaft eine Kombination von Windsichten und Sieben eingesetzt werden kann.

Zur Durchführung der Verfahrens-Variante mit den beiden Teilmähbahnen TB, TB' ist vorgesehen, dass das abgeschnittene und in Richtung B aufgenommene Erntegut 3 in zwei quer zusammengeführten Teilförderströmen 9, 10, 11, 12 (Fig. 4) zu den beiden synchronen Systemabschnitten weitergeleitet wird. Diese jeweils zwei Teilförderströme 9, 10 bzw. 11, 12 werden damit gemeinsam ihrem Druschvorgang im Bereich der Dreschaggregate 7, 7' zugeführt. Aus diesem heraus können danach jeweils zwei getrennte Förderströme in eine jeweilige Separierphase 13, 14 bzw. 13', 14' übergeleitet werden. In diesen Separierphasen wird eine Ausleitung der Beimengungen gemäß Pfeil D aktiviert, wobei insbesondere ein Gemisch aus Spreu SP' und Stroh SR unmittelbar auf den Ackerboden 15 ausgeleitet und verteilt wird. Diese Ausleitung ist mit dem Pfeil D in Fig. 1 veranschaulicht.

Im Bereich dieser jeweils paarweise erfolgenden ersten Phase der Separierungen 13, 14, 13', 14' sind entsprechende Baugruppen so anzuordnen, dass mit diesen die Druschfrüchte mit verbleibenden Restbeimengungen als der Korn-Spreu-Strom C der im System oben liegenden Endreinigung 5 zugeführt werden können (Fig. 2, Fig. 3). Damit wird deutlich, dass das erfindungsgemäße Verfahren vorteilhaft darauf gerichtet ist, dass im Nahbereich der Aufnahme B die Separierung und Sammlung der Körner als Druschfrüchte mit einer sofortigen gezielten Ableitung von Restbeimengungen in Form von Stroh SR und Spreu SP auf engem Raum realisiert wird. Mit diesem kompakten Verfahrensablauf kann ein optimales Ernteergebnis erreicht werden. Dabei ist vorteilhaft vorgesehen, dass sämtliche mit den beiden Teilmähbahnen TB, TB' aufgenommenen Beimengungen in einer möglichst frühen Verarbeitungsphase vereinzelt und weitgehend gleichmäßig auf einer abgeernteten Ackerfläche 15 verteilt werden können.

Das Gesamtkonzept der neuen Verfahrensführung ist darauf gerichtet, dass der in mehreren Phasen zu verlagernde Korn-Spreu-Strom C nunmehr mittels der "umgelenkten" Transportbewegung T auf besonders engem Raum geführt werden kann. Daraus resultiert eine überraschende konstruktive Verbesserung, denn eine in Arbeitsfahrtrichtung AF definierbare Länge LB (Fig. 1) mit den wesentlichen Komponenten des Aufnahme-, Dresch- und Fördersystems kann minimale Abmessungen aufweisen. Das in Arbeitsfahrtrichtung AF eine konstruktiv variable Arbeitsbreite AB (Fig. 3) - hier mit zwei Teilmähbahnen TB, TB' - aufweisende System kann nach einer im Bereich der Bodenabstützungen 29, 30, 31, 32 - einer ebenfalls variablen Trägerkonstruktion - erfolgenden Umstellung auf eine Straßenfahrtrichtung SF (Pfeil S, Fig. 6) auf das "Längenmaß" LB ausgerichtet werden. Damit werden die im Straßenverkehr geforderten, maximal zulässigen Abmessungen eingehalten, und das System kann weitgehend autark im öffentlichen Verkehr bewegt werden.

Ausgehend von der vorbeschriebenen Doppel-Anordnung von Druschsystemen im Bereich der Teilmähbahnen TB, TB' erfolgt eine erfindungsgemäße Anpassung des Systems dadurch, dass an dem zumindest einen Druschaggregat 7, 7' auch mehrere der in Fig. 1 gezeigten Hochförderer 8 vorgesehen sein können. Aus den Darstellungen gemäß Fig. 3 bis 5 wird deutlich, dass hier weitgehend symmetrisch zur Längsmittelebene M zwei Hochförderer 8, 8' zur Beschickung der hier zentral angeordneten Endreinigung 5 vorgesehen sind. Dabei versteht es sich, dass die Hochförderer 8, 8' zumindest am oberseitigen Auslassende 17, 17' mit zumindest einem Querförderer 16 zusammenwirken, der die Einleitung des mit der jeweiligen Transportbewegung T, T' hochgeförderten Korn-Spreu-Stromes C in den Bereich der Endreinigung 5 regelt.

Mit diesem System einer Zweifachanordnung von Druschaggregat 7, 7' und Hochförderern 8, 8' wird die eine Arbeitsbreite AB aufweisende Vorrichtung 1 an eine wesentliche Leistungssteigerung angepasst. Es hat sich gezeigt, dass eine im Vergleich mit bekannten Mähdreschern eine größere Schnittbreite definierende oder zumindest gleich große Mähbahn - in Form der beiden Teilmähbahnen TB, TB' - aufnehmbar ist. Ausgehend von dieser ersten Komponente eines Konzeptes zur Leistungssteigerung wirkt sich auch die integrierte "Vertikalausrichtung" des Systems mit umgelenkter Transportbewegung T, T' des Korn-Spreu-Stromes C, C' dahingehend aus, dass nunmehr die zur Ernte aufzunehmende Mähbahn über vergleichsweise kürzere Förderwege F den einzelnen Komponenten des Systems zugeführt werden kann. Damit wird eine insgesamt kompaktere Vorrichtung 1 vorgeschlagen, die die Verarbeitung des Erntegutes 3 mit verbesserter Energiebilanz ermöglicht.

Eine kostenoptimal verbesserte Ausführung der Vorrichtung 1 sieht vor, dass die beiden Dreschaggregate 7, 7' mit an sich bekannten Baugruppen zum Sieben, Separieren und Sammeln der Druschfrüchte versehen werden. Mit diesen Baugruppen können dann variable Kombinationen aufgebaut werden, bei denen im Bereich eines oder mehrerer Hochförderer 8, 8' jeweilige Baugruppen zum Behandeln und Ableiten von Stroh SR sowie Spreu SP, SP' funktional effektiv zugeordnet sind. Damit wird eine Zwei-Dreschaggregate-Konstruktion aufgebaut, die als autarke Einheit in variierende Basisstrukturen - beispielsweise in Form von fahrbaren Systemträgern - integriert werden kann. Daraus resultiert, dass anwendungsspezifisch unterschiedliche Konzepte für den Kunden bereitstellbar sind.

Ausgehend von der frontseitigen Zuführung mit erhöhter Förderleistung im Bereich der Aufnahme 2 und der unmittelbar anschließenden kompakten ersten Separierung kommt einer optimalen Konstruktion im Bereich der zweiten Separierphase mit Kornsammlung eine besondere Bedeutung zu. Es ist vorgesehen, dass im Bereich des den hochzufördernden Korn-Spreu-Strom C, C' erfassenden Hochförderers 8, 8' zumindest ein das zuströmende Gemisch im Bereich der Endreinigung 5 erfassender Querförderer 16 mit fördergerechter Weiterleitung und optimierbarem Austrag von Korn und Spreu SP vorgesehen ist.

Dabei wird das Ziel verfolgt, dass im Bereich des jeweils aus der Hochförderphase der Endreinigung 5 zugeführten Korn-Spreu-Stromes C, C' eine weitgehend konstante Gemischdicke 33 im Bereich einer sich unterhalb des Querförderers 16 erstreckenden Separierfläche 34 (Breite BS, Länge LS) zur Separierung der Spreu SP vom Korn bereitgestellt wird (Fig. 6).

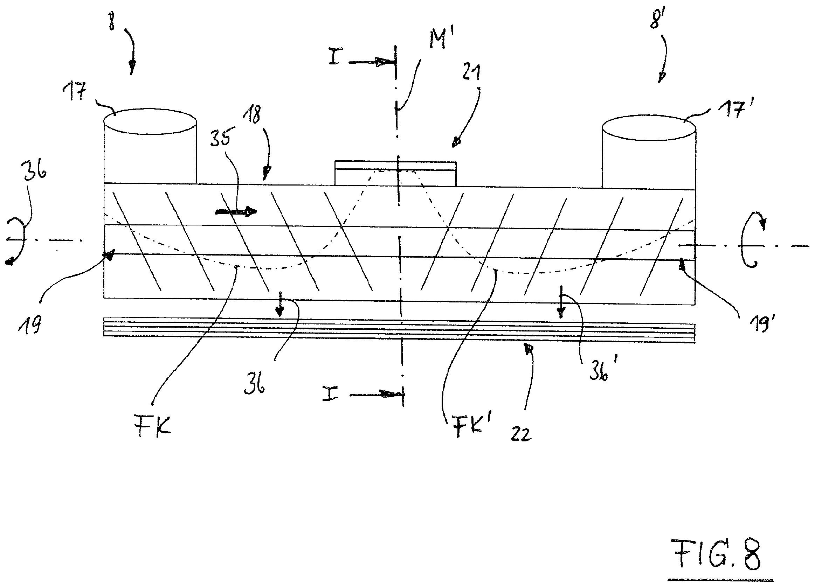

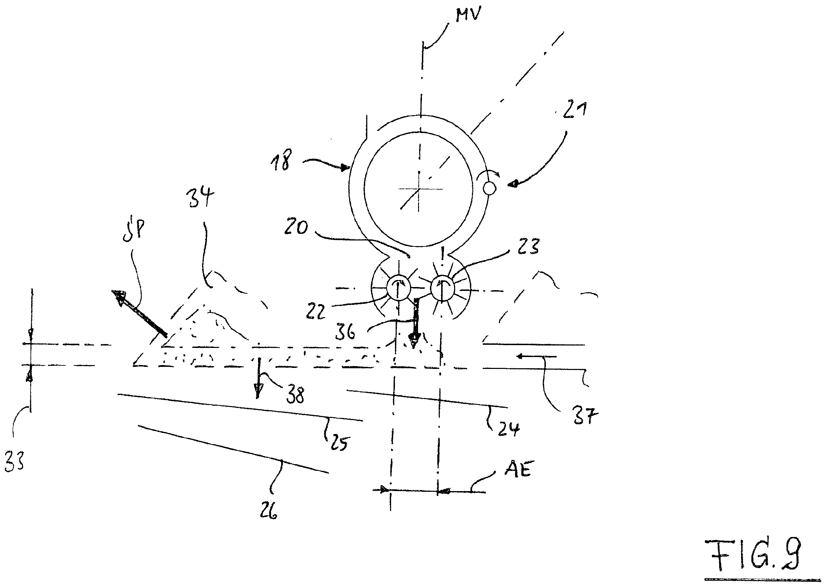

Aus den Übersichtsdarstellungen in Fig. 8 und 9 wird die verbesserte Konstruktion im Bereich des Querförderers 16 deutlich. Der am auslassseitigen Ende 17 des Hochförderers 8 vorgesehene Querförderer 16 ist dabei mit einer das in Pfeilrichtung T, T' gemäß Transportbewegung zuströmende Gemisch axial in einem Verteilrohr 18 verlagernden (Pfeil 35) und eine Drehrichtung 36 aufweisenden Förderschnecke 19 versehen. Mit dieser Förderschnecke 19 können die verlagerten Teilmengen des Gemisches einerseits durch einen bodenseitigen Axialschlitz 20 aus dem Verteilrohr 18 ausgefördert werden. Andererseits wird eine in die Pfeilrichtung 35 verlagerte Teilmenge - entsprechend der Förderrichtung der Schnecke 19 - einer insgesamt mit 21 bezeichneten Füllstandsdetektierung zugeführt.

Diese konstruktiv variabel ausführbare Füllstandsdetektierung 21 wirkt mit zumindest einer unterhalb des Axialschlitzes 20 rotierenden Beschleunigungswalze 22, 23 zusammen. Im Ergebnis der Detektierung des Füllstandes können die Walzen 22, 23 beeinflusst werden, so dass mit deren jeweiliger Abstandsänderung die Gutverteilung im Bereich des Axialschlitzes 20 - gemäß eines in Pfeilrichtung 36 austretenden Volumenstromes - steuerbar ist.

Aus den Darstellungen in Fig. 8 und 9 wird auch deutlich, dass im Bereich unterhalb des Axialschlitzes 20 vorteilhaft zwei gegensinnig umlaufende Beschleunigungswalzen 22, 23 vorgesehen sind und ein jeweils zwischen diesen erfasstes Volumen des Gemisches mittels einer durch die Füllstandsdetektierung 21 beeinflussbaren Abstandsänderung AE der beiden Beschleunigungswalzen 22, 23 veränderbar ist. Ausgehend von dem vorbeschriebenen System der Zwei-Druschaggregate-Kombination (Fig. 2 bis Fig. 8) wird deutlich, dass der Querförderer 16 im Bereich seines mit den Hochförderern 8, 8' zusammenwirkenden zentralen Verteilrohres 18 zwei endseitige Zufördereingänge bei 17 und 17' aufweist. Von diesen ausgehend wird das Gemisch mittels jeweils einer jeweiligen Förderschnecke 19, 19' zur Rohrmitte M' hin verlagert. In diesem Bereich ist dann die Füllstandsdetektierung 21 so angeordnet, dass mittels der - bereits im Bereich der Förderschnecke 19 - vorbeschriebenen Abstandsverstellung in Relation zum Axialschlitz 20 das Volumen des austretenden Korn-Spreu-Stromes 36 mit Blick auf die unterhalb vorgesehene Reinigung - beispielsweise durch Windsichten in Richtung 37 - geregelt werden kann. In Fig. 9 ist der prinzipielle Einsatz einer Kombination von Windsichten und Sieben mit den Pfeilen 37, SP sowie 38 (ausfallendes Korn) angedeutet, wobei hier noch jeweilige Siebelemente 24, 25, 26 o. dgl. an sich bekannte Zusatzbaugruppen dargestellt sind.

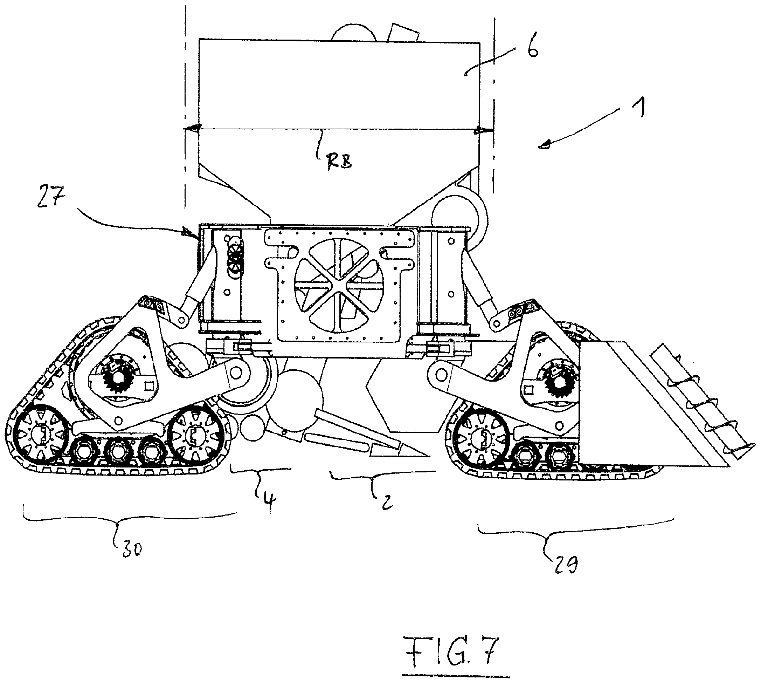

Die vorbeschriebene Vorrichtung zur Durchführung des Verfahrens gemäß Anspruch 1 bis 6 ist zu einer insgesamt fahrbaren Einheit (Fig. 5 bis Fig. 7) komplettierbar. Dabei ist vorgesehen, dass die Bauteile der zumindest einen Aufnahme 2 sowie das zumindest eine nachgeordnete Dreschaggregat 7, 7' im Bereich eines in Draufsicht (Fig. 6) im Wesentlichen U-förmig gestaltbaren und mit den jeweiligen randseitigen Bodenabstützungen 29, 30, 31, 32 sowohl auf einem Feld 15 als auch im Straßenverkehr - Strichdarstellung in Fig. 6 - fahrbeweglich ausrichtbaren Funktionsrahmens 27 (Fig. 6, Fig. 7) angeordnet sind.

Es versteht sich, dass in diesen Funktionsrahmen 27 auch zumindest ein mit einer oberen Endreinigung 5 sowie einem Sammelbunker 6, 6' zusammenwirkender Hochförderer 8, 8' integriert ist. Damit wird der modulare Aufbau dieses neuen Typs eines "Mähdreschers" aus variierenden Baugruppen deutlich.

Aus Fig. 5 und Fig. 7 wird eine optimale konstruktive Gestaltung dieser fahrbaren Vorrichtung 1 ersichtlich, wobei zumindest das Schneidwerk 2 der Aufnahme des Systems in Arbeitsfahrtrichtung AF zumindest bereichsweise hinter jeweiligen, hier vorlaufenden Bodenabstützungen 29, 31 des Funktionsrahmens 27 angeordnet werden kann. Daraus folgt - im Vergleich mit an sich bekannten "linearen" Mähdreschern - eine weitere Optimierungsmöglichkeit dahingehend, dass nunmehr eine zwischen den Bodenabstützungen definierbare vordere Stützachse 40 (Fig. 5) den sowohl in Arbeitsfahrtrichtung AF als auch bei der Straßenfahrt SF nutzbaren Raum des Systems - mit den Maßen RB und RL - nicht mehr einschränkt.

Die Zusammenschau des Systems mit dem Funktionsrahmen 29 verdeutlicht auch, dass an diesem an sich bekannte Schneid-, Dresch- , Separier- und Förderkomponenten so verwendet werden können, dass eine insgesamt modulare Baugruppe auch unter kostenoptimalen Gesichtspunkten bereitgestellt werden kann. Für die gesamte Struktur des neuen Mähdrescher-Konzeptes versteht es sich, dass jeweilige Positionsangaben wie "vorn", "hinten", "vorwärts", "oben, "unten" und "rückwärts" auf die nach vorn gerichtete Arbeitsfahrtrichtung AF bezogen sind und dabei die Aufnahme 2 typischerweise an der Front angeordnet ist und die Restmengen des Erntegutes hinten ausgeleitet werden.

Aus fachgemäßen Überlegungen ist ableitbar, dass die vorbeschriebene Vorrichtung 1 in sämtlichen der Ausführungen mit entsprechenden, nicht näher dargestellten Antriebskomponenten versehen ist. Für die optimale Handhabung - sowohl in der Arbeitsfahrtrichtung AF als auch in der Straßenfahrtrichtung SF - können entsprechend regelbare Steuereinheiten mit manuell bedienbaren und/oder automatischen Komponenten vorgesehen werden. Diese nicht näher dargestellten elektronischen und elektrischen Baugruppen können ggf. auch im Bereich einer ebenfalls nicht näher dargestellten Fahrerkabine angeordnet werden. Dabei ist prinzipiell auch die Ausführung eines "führerlosen" Systems mittels variabel ausführbarer Komponenten zur Programmierung und Fernsteuerung denkbar.

Die erfindungsgemäße Vorrichtung mit zumindest einem der Merkmale der Ansprüche 7 bis 15 zur Durchführung des Verfahrens gemäß Anspruch 1 bis 6 zeichnet sich dadurch aus, dass die zumindest eine Aufnahme 2 und das zumindest eine nachgeordnete Dreschaggregat 7, 7' im Bereich eines in Draufsicht im Wesentlichen U-förmig gestaltbaren und mit jeweiligen randseitigen Bodenabstützungen 29, 30; 31, 32 sowohl auf einem Feld als auch im Straßenverehr fahrbeweglich ausrichtbaren Funktionsrahmens 27 angeordnet sind und in diesen zumindest ein mit einem oberen Sieborgan der Endreinigung 5 sowie zumindest einem Sammelbunker 6, 6' zusammenwirkender Hochförderer 8, 8' zur Transportbewegung T, T' integrierbar ist. Dazu ist vorgesehen, dass zumindest das Schneidwerk 2 des Systems in Arbeitsfahrtrichtung AF zumindest bereichsweise hinter einer Querachse 40 jeweiliger vorlaufender Bodenabstützungen 29, 31 des Funktionsrahmens 27 angeordnet ist.

Ein weiterer Vorteil wird dadurch erreicht, dass in dem Funktionsrahmen 27 an sich bekannte Schneid-, Dresch-, Separier- und Förderkomponenten als modulare Baugruppen verwendet werden. Außerdem kann das System mit einer oder mehreren Antriebskomponenten versehen sein, die über zumindest eine Steuereinheit regelbar ist/sind.

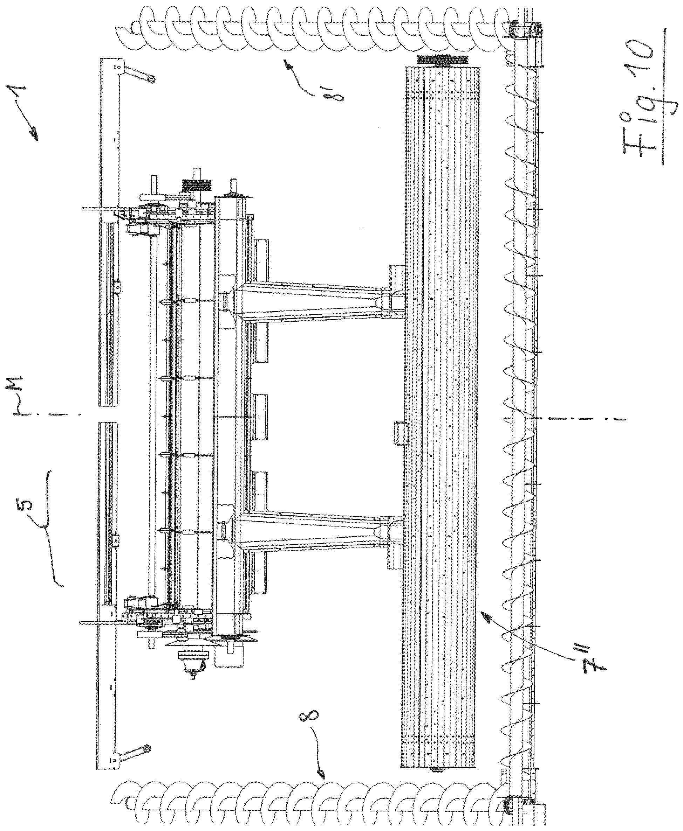

Eine weitere Variation des erfindungsgemäßen Systems ist in Fig. 10 dargestellt. Die hier dargestellte Vorrichtung 1 zeigt, dass dem die Mähbahn aufnehmenden Schneidwerk 2 (Fig. 5) ein im Wesentlichen zentral und spiegelbildlich zur Längsmittelebene M des Systems angeordnetes Dreschaggregat 7" zugeordnet ist. Damit sind weitere konstruktive Optimierungen des Gesamtsystems (Fig. 4) möglich.

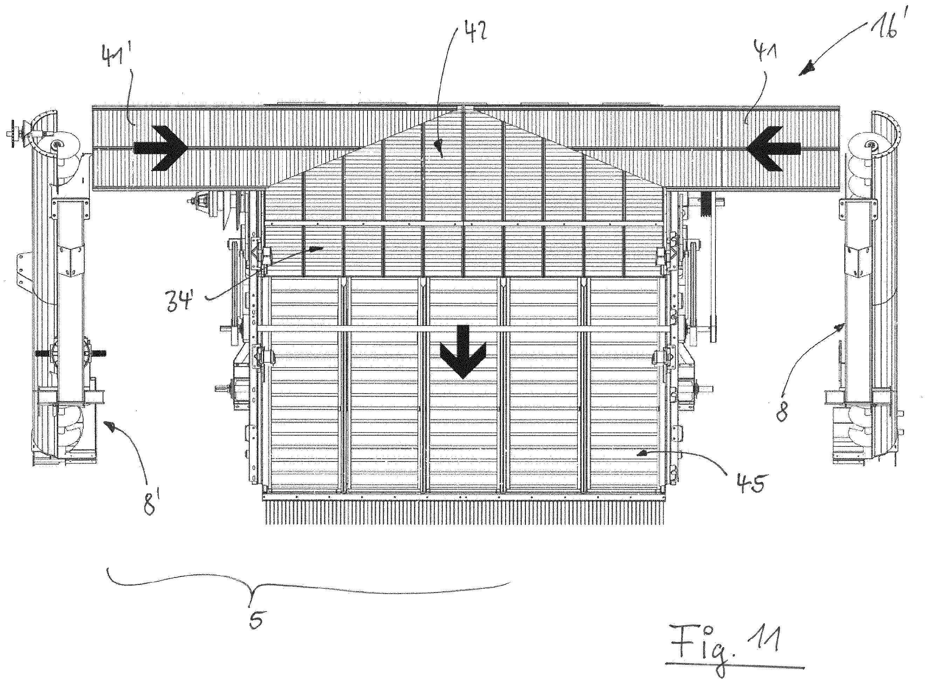

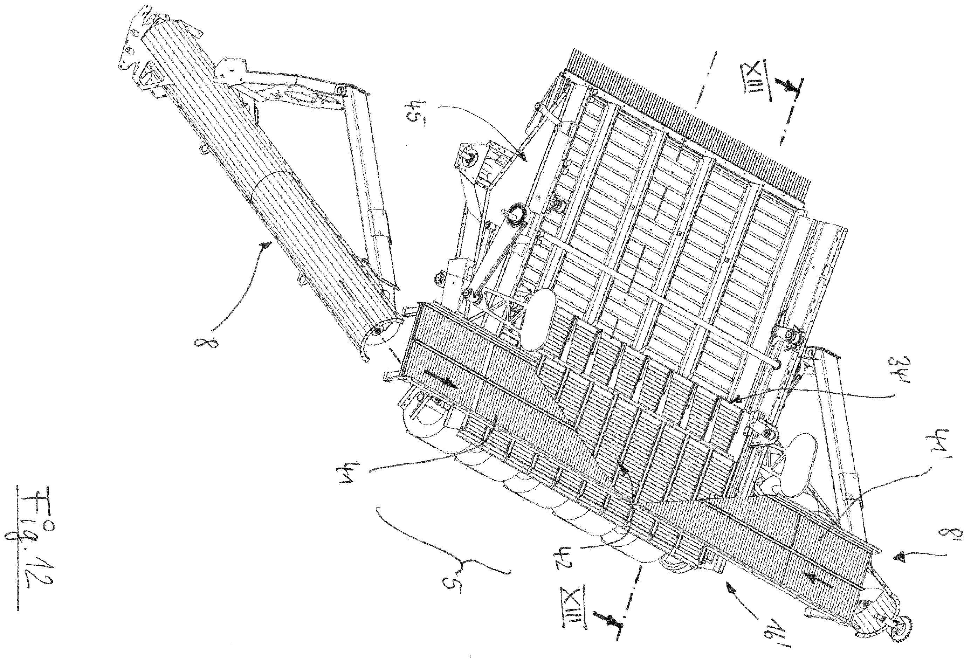

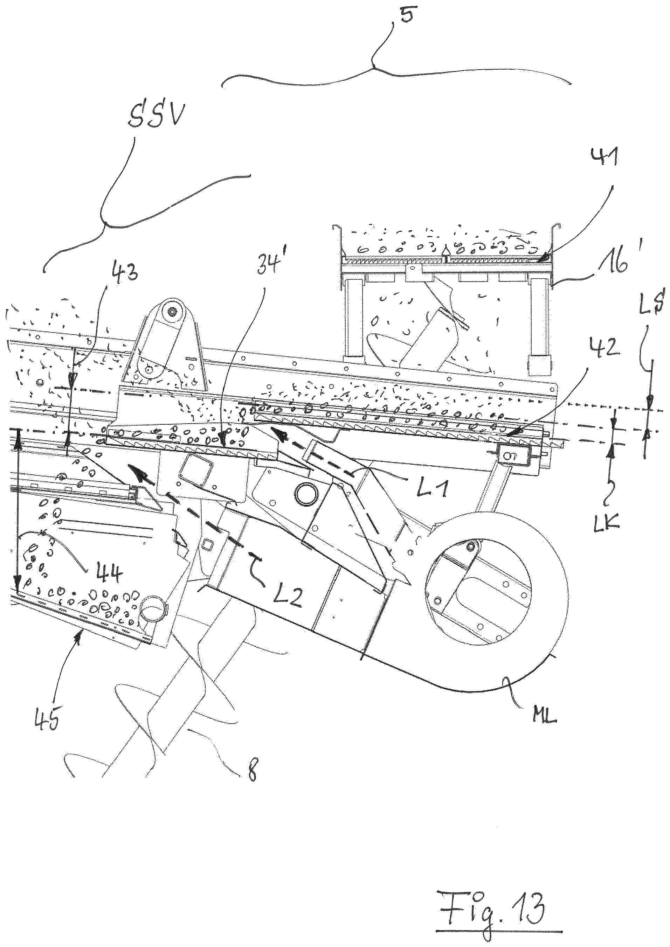

Weitere konstruktive Verbesserungen sind auf eine Optimierung im Bereich der oben liegenden Endreinigung 5 gerichtet. Aus den Darstellungen gemäß Fig. 11 bis 13 sind konstruktive Details im Bereich dieses Aggregatesatzes ersichtlich. Dabei ist vorgesehen, dass der am auslassseitigen Ende des jeweiligen Höchförderers 8, 8' vorgesehene Querförderer 16' von zumindest einem die Phase der Endreinigung vorbereitenden Querschwingförderer 41, 41' gebildet ist. Ausgehend von der bereits gezeigten Separierfläche 34 (Fig. 6) sieht die veränderte Konstruktion im Bereich des Querförderers 16' nunmehr eine verbesserte Siebkastenzuführung vor. Nunmehr wird bereits unmittelbar anschließend an den Hochfördervorgang im Bereich der Hochförderer 8, 8' eine erste Stufe des Sieb- und Sichtvorganges realisiert, derart, dass eine weitgehend gleichmäßige Verteilung der Kornlage LK bzw. Spreulage LS (Fig. 13) erreicht wird. Es hat sich gezeigt, dass mit der in Fig. 11 bis 13 gezeigten Konstruktion eine erste Phase des Sieb- und Sichtvorganges SSV mit gleichmäßigen Förderlagen von unten liegendem Korn LK und oben liegender Spreu LS erreichbar ist. Damit kann nachfolgend ein effektiver Windsichtvorgang mit hoher Effizienz eingeleitet werden. Aus der Querschnittsdarstellung in Fig. 13 wird deutlich, dass die vom jeweiligen Querschwingförderer 41, 41' abgeleiteten zweischichtigen Förderlagen mittels zumindest eines Querluftstromes L1 bzw. L2 beeinflussbar sind. Die Erzeugung der Querluftströme L1 und L2 ist dabei mit an sich bekannten Baugruppen ML möglich. Die schematische Darstellung verdeutlicht, dass nunmehr eine effektive Phase des Windsichtens im Bereich L1 und L2 so einleitbar ist, dass eine effektive Weiterleitung des abzutrennenden Spreuanteils insbesondere im Bereich einer Separierfläche 34' möglich ist.

Die Umsetzung dieses Mehr-Phasen-Windsichtens sieht vor, dass die jeweiligen Querschwingförderer 41, 41' mit zumindest einer unterhalb von diesen angeordneten Fangplatte 42 zusammenwirken können. Von dieser Fangplatte 42 aus können die hier bereits mittels des Rüttelvorgangs bei 41 erzeugten Förderlagen LK, LS zu zumindest einer mit einer Fallstufe 43 beabstandeten unteren Separierfläche 34' hin verlagert werden. Es versteht sich, dass dabei zumindest im Bereich dieser Fallstufe 43 eine Separierung mittels des Windsichtens mit Luftstrom L1 erfolgen kann. In vorteilhafter Ausführung ist vorgesehen, dass auf dem Weg zu einem unteren Siebkasten 45 hin eine zweite Fallstufe 44 so in das System integriert wird, dass in dem Siebkasten 45 weitgehend von Spreu gesäubertes Korn gelangt und dieses in üblicher Weise zu den Sammelbehältern 6, 6' (Fig. 5) gefördert werden kann.

## Patentansprüche

1. Dreschverfahren zum Ernten von Druschfrüchten, wobei diese von einem insbesondere in Form von Getreide aufzunehmenden Erntegut (3) getrennt, dieses nach einem entgegen einer Arbeitsfahrtrichtung (AF) erfolgenden Aufnahmevorgang (Pfeil B) einer Dreschphase (4) zugeführt und während dieser das Erntegut (3) als die jeweiligen Druschfrüchte sowie die Beimengungen in Form von Stroh (SR) und Spreu (SP') aufbereitet werden (Pfeil C, Pfeil D), derart, dass wesentliche ausleitbare Beimengungen (Pfeil D) von den Druschfrüchten separiert, diese als ein Gemisch mit Spreu o. dgl. Feinteilen als Korn-Spreu-Strom (C) einer Endreinigung (5) zugeführt und danach die von diesen Restbeimengungen freien Körner als Druschfrüchte gesammelt werden, **dadurch gekennzeichnet, dass** während zumindest einer der Endreinigung (5) vorgelagerten Zuführphase (Z) dem zumindest einen Korn-Spreu-Strom (C) eine eine Komponente in vertikaler Richtung (R) und eine Komponente in Arbeitsfahrtrichtung (AF') aufweisende Transportbewegung (T) vermittelt wird.

2. Dreschverfahren nach Anspruch 1, **dadurch gekennzeichnet, dass** der zu einer oberen Endreinigung (5) hin in mehreren Phasen zu verlagernde Korn-Spreu-Strom (C) mittels der Transportbewegungen (T) auf engem Raum geführt wird und damit eine in Arbeitsfahrtrichtung (AF) definierbare Länge (LB) des Dreschund Fördersystems minimiert werden kann, derart, dass ein in Arbeitsfahrtrichtung (AF) eine weitgehend variable Arbeitsbreite (AB) aufweisendes Ernte-Förder-System nach einer quer zur Arbeitsfahrtrichtung (AF) erfolgenden Umstellung in Form einer Fahreinstellung (Pfeil S) so positionierbar ist, dass in einer damit definierten Straßenfahrtrichtung (SF) dieses System weitgehend autark im öffentlichen Verkehr bewegt werden kann.

3. Dreschverfahren nach Anspruch 1 oder 2, **dadurch gekennzeichnet, dass** der ausgehend von der Dreschphase mit der nachfolgenden Transportbewegung (T) hochzufördernde Korn-Spreu-Strom (C) zum Ausleiten der Spreu (SP) in einer oder mehreren Richtung(en) der Endreinigung (5) zugeführt wird und dabei der Korn-Spreu-Strom (C) während der Reinigung in jeweiligen Bewegungsachsen in oder entgegen der Arbeitsfahrtrichtung (AF) geführt wird.

4. Dreschverfahren nach einem der Ansprüche 1 bis 3, **dadurch gekennzeichnet, dass** das Korn des hochgeförderten und während der Endreinigung (5) aufgeteilten Korn-Spreu-Stromes (C) in zumindest einen in Relation zum Aufnahme- und Dreschvorgang (B) oben liegenden Sammelbehälter (6, 6') eingeleitet wird, wobei vor der Einleitung des Kornes in den oben liegenden Sammelbehälter (6, 6') die Spreu (SP) in einer oder mehreren Trennphase(n) ausgeleitet wird und zum Trennen der Spreu (SP) aus dem Korn-Spreu-Strom (C) eine Kombination von Windsichten (Pfeil 37) und Sieben (Pfeil 38) eingesetzt wird.

5. Dreschverfahren nach einem der Ansprüche 1 bis 4, **dadurch gekennzeichnet, dass** ausgehend von einer eine Schnittbreite mit mehreren Erntezeilen (EZ) definierenden Mähbahn das Erntegut (3) in zumindest zwei Teilmähbahnen (TB, TB') erfasst, danach diese in den Bereich separater Förder-, Dresch- und Separierstrecken eingeleitet, dabei das Erntegut (3) in zwei Systemen weitgehend parallel weiterverarbeitet und nach einer hochfördernden Transportbewegung (T) von Korn und Spreu mittels anschließender Endreinigung (5) das Korn separiert und gesammelt wird.

6. Dreschverfahren nach einem der Ansprüche 1 bis 5, **dadurch gekennzeichnet, dass** im Bereich der Teilmähbahnen (TB, TB') abgeschnittenes Erntegut (3) jeweils in zwei quer zusammengeführten Teilförderströmen (9, 10; 11, 12) weitergeleitet, diese beiden Teilförderströme (9, 10; 11, 12) jeweils gemeinsam einem Dreschvorgang zugeführt, danach zwei getrennte Förderströme in eine jeweilige Separierphase (13, 14; 13', 14') übergeleitet und hier sowohl eine Ausleitung der Beimengungen (Pfeil D) aktiviert wird als auch die Druschfrüchte mit Restbeimengungen gemäß dem Korn-Spreu-Strom (C) einer im System oben liegenden Endreinigung (5) zugeführt werden.

7. Vorrichtung zur Durchführung des Verfahrens nach einem der Ansprüche 1 bis 6, wobei das von einem Schneidwerk o. dgl. Aufnahme (2) zugeführte Erntegut (3) in ein Dreschaggregat (4) eingezogen wird, aus diesem Stroh (Pfeil D) sowie ein Korn-Spreu-Strom (C) abgeschieden werden und nach dessen Endreinigung (5) das Korn einem Sammelbunker (6) zuführbar ist, **dadurch gekennzeichnet, dass** das Dreschaggregat (4) zur Aufnahme des aus diesem ausgeleiteten Korn-Spreu-Stroms (C) mit einem diesen umlenkenden und eine in Bezug zum Dreschaggregat (4) nach oben gerichtete Förderstrecke definierenden Hochförderer (8, 8') zusammenwirkt, derart, dass der Korn-Spreu-Strom (C) zumindest phasenweise eine eine Komponente in vertikaler Richtung (R) und eine Komponente in Arbeitsfahrtrichtung (AF') aufweisende Transportbewegung (T) aufweist.

8. Vorrichtung nach Anspruch 7, **dadurch gekennzeichnet, dass** an dem zumindest einen bodennah angeordneten Dreschaggregat (7, 7', 7") ein oder mehrere Hochförderer (8, 8') vorgesehen ist/sind.

9. Vorrichtung nach Anspruch 7 oder 8, **dadurch gekennzeichnet, dass** der/die Hochförderer (8, 8') mit zumindest einem Querförderer (16) zusammenwirken.

10. Vorrichtung nach einem der Ansprüche 7 bis 9, **dadurch gekennzeichnet, dass** dem die Mähbahn aufnehmenden Schneidwerk (2) zwei im Wesentlichen parallel nebeneinander wirksame Dreschaggregate (7, 7') mit zumindest einem Hochförderer (8, 8') zugeordnet sind, derart, dass eine im Vergleich mit bekannten Mähdreschern eine größere Arbeitsbreite (AB) definierende oder zumindest gleich große Mähbahn aufnehmbar ist, derart, dass nunmehr das Erntegut (3) über vergleichsweise kürzere Förderwege dem System zuführbar und in diesem verarbeitbar ist.

11. Vorrichtung nach einem der Ansprüche 7 bis 10, **dadurch gekennzeichnet, dass** im Bereich des den hochzufördernden Korn-Spreu-Strom (C) erfassenden Hochförderers (8, 8') zumindest ein das zuströmende Gemisch im Bereich vor der Endreinigung (5) erfassender Querförderer (16) vorgesehen ist, derart, dass im Bereich des aus der Hochförderphase der Endreinigung (5) zugeführten Korn-Spreu-Stromes (C) eine weitgehend konstante Gemischdicke (33) zur Separierung bereitstellbar ist.

12. Vorrichtung nach Anspruch 11, **dadurch gekennzeichnet, dass** der am auslassseitigen Ende des Hochförderers (8, 8') vorgesehene Querförderer (16) mit zumindest einer das zuströmende Gemisch (C) axial in einem Verteilrohr (18) verlagernden Förderschnecke (19) versehen ist, mit der im Verteilrohr (18) verlagerte Teilmengen des den Korn-Spreu-Strom bildenden Gemisches (C) einerseits durch einen bodenseitigen Axialschlitz (20) ausgefördert und andererseits in Förderrichtung (35) einer Füllstandsdetektierung (21) zugeführt werden, wobei diese mit zumindest einer unterhalb des Axialschlitzes (20) rotierenden Beschleunigungswalze (22) so zusammenwirkt, dass mit deren Abstandsänderung (AE) im Bereich des Axialschlitzes (20) die Gutverteilung (36) steuerbar ist.

13. Vorrichtung nach einem der Ansprüche 11 bis 12, **dadurch gekennzeichnet, dass** der Querförderer (16) im Bereich des Verteilrohres (18) zwei endseitige Zufördereingänge (17, 17') aufweist, von diesen jeweils eine Förderschnecke (19, 19') das Gemisch (C) zur Rohrmitte (M') hin verlagert, sich in diesem Bereich eine entsprechende Füllkurve (FK, FK') aufbaut und diese mit der regelbaren Füllstandsdetektierung (21) erfassbar ist.

14. Vorrichtung nach einem der Ansprüche 7 bis 11, **dadurch gekennzeichnet, dass** dem die Mähbahn aufnehmenden Schneidwerk (2) ein im Wesentlichen zentral und spiegelbildlich zur Längsmittelebene (M) des Systems angeordnetes Dreschaggregat (7") zugeordnet ist.

15. Vorrichtung nach einem der Ansprüche 7 bis 11, **dadurch gekennzeichnet, dass** der am auslassseitigen Ende der/des Hochförderer(s) (8, 8') vorgesehene Querförderer (16') von zumindest einem die Endreinigung vorbereitenden Querschwingförderer (41, 41') gebildet ist, derart, dass damit eine erste Phase eines Sieb- und Sichtvorganges (SSV) mit gleichmäßigen Förderlagen von unten liegendem Korn (LK) und oben liegender Spreu (LS) erreichbar ist.

## Claims

1. Threshing method for harvesting grain crops, wherein these are separated from harvested material (3) to be gathered, particularly in the form of grain, which is fed to a threshing phase (4) after a gathering process (arrow B) taking place against a direction of working travel (AF) and during this phase the harvested material (3) is processed as the respective grain crops as well as the admixtures in the form of straw (SR) and chaff (SP') (arrow C, arrow D) in such a way that essential, dischargeable admixtures (arrow D) are separated from the grain crops, these, in the form of a mixture with chaff or similar fine particles, are fed as a grain/chaff stream (C) to a final cleaning (5) and the grains free of these residual admixtures are subsequently collected as grain crops, **characterised in that** during at least one feed phase (Z) preceding the final cleaning (5), a transport movement (T) having a component in the vertical direction (R) and a component in the direction of working travel (AF') is imparted to the at least one grain/chaff stream (C).

2. Threshing method according to claim 1, **characterised in that** the grain/chaff stream (C) to be displaced in several phases towards an upper final cleaning (5) is guided to a narrow space by means of the transport movements (T) and thus a length (LB) of the threshing and conveying system which can be defined in the direction of working travel (AF) can be minimised such that a crop-conveying system having a largely variable working width (AB) in the direction of working travel (AF) can be positioned after a repositioning transverse to the direction of working travel (AF) in the form of a driving setting (arrow S) in such a way that this system can be moved largely autonomously in public transport in a direction of road travel (SF) defined by this setting.

3. Threshing method according to claim 1 or 2, **characterised in that** the grain/chaff stream (C) to be conveyed upwards starting from the threshing phase with the subsequent transport movement (T) is fed to the final cleaning (5) in one or more direction(s) for the discharge of the chaff (SP), and the grain/chaff stream (C) is guided during the cleaning in respective axes of movement in or against the direction of working travel (AF).

4. Threshing method according to any one of claims 1 to 3, **characterised in that** the grain of the grain/chaff stream (C), which is conveyed upwards and divided during the final cleaning (5), is introduced into at least one collecting container (6, 6') located at the top in relation to the gathering and threshing process (B), wherein the chaff (SP) is discharged in one or more separation phase(s) before the grain is introduced into the upper collecting container (6, 6') and a combination of wind winnowing (arrow 37) and sieving (arrow 38) is used to separate the chaff (SP) from the grain/chaff stream (C).

5. Threshing method according to any one of claims 1 to 4, **characterised in that**, starting from a mowing path defining a cutting width with several harvesting lines (EZ), the harvested material (3) is collected in at least two partial mowing paths (TB, TB'), which are then introduced into the region of separate conveying, threshing and separating paths, and in which connection the harvested material (3) is further processed largely in parallel in two systems and, after an upwardly conveying transport movement (T) of grain and chaff, the grain is separated and collected by means of subsequent final cleaning (5).

6. Threshing method according to any one of claims 1 to 5, **characterised in that** harvested material (3) cut off in the region of the partial mowing paths (TB, TB') is passed on in each case in two transversely merged partial flows (9,10; 11,12), these two partial flows (9, 10; 11, 12) are each jointly fed to a threshing process, after which two separate flow are transferred to a respective separation phase (13, 14; 13', 14') and here both a discharge of the admixtures (arrow D) is activated and the grain crops with residual admixtures are separated in line with the grain/chaff stream (C) of a final cleaning (5) located at the top of the system.

7. Device for carrying out the method according to any one of claims 1 to 6, wherein the harvested material (3) fed by a cutting mechanism or similar intake (2) is drawn into a threshing unit (4), from which straw (arrow D) and a grain/chaff stream (C) are separated, and after the final cleaning (5) of which the grain can be fed to a collecting tank (6), **characterised in that** the threshing unit (4), in order to gather the grain/chaff stream (C) discharged therefrom, interacts with an elevating conveyor (8, 8') which deflects the grain/chaff stream (C) and defines a conveying section directed upwards in relation to the threshing unit (4), in such a way that the grain/chaff stream (C) has, at least in phases, a transport movement (T) which has a component in the vertical direction (R) and a component in the direction of working travel (AF').

8. Device according to claim 7, **characterised in that** one or more elevating conveyors (8, 8') is/are provided on the at least one threshing unit (7, 7', 7") arranged close to the ground.

9. Device according to claim 7 or 8, **characterised in that** the elevating conveyor(s) (8, 8') cooperate with at least one cross conveyor (16).

10. Device according to any one of claims 7 to 9, **characterised in that** two threshing units (7, 7') with at least one elevating conveyor (8, 8'), operating substantially parallel next to one another, are associated with the cutting mechanism (2) undertaking the mowing path, in such a way that a mowing path defining a larger working width (AB) or at least equally large in comparison with known mowing threshers can be undertaken in such a way that the harvested material (3) can now be fed to the system over comparatively shorter conveying paths and processed therein.

11. Device according to any one of claims 7 to 10, **characterised in that** in the region of the elevating conveyor (8, 8') detecting the grain/chaff stream (C) to be elevated, at least one cross conveyor (16) detecting the inflowing mixture in the region before the final cleaning (5) is provided such that a substantially constant mixture thickness (33) can be provided for separation in the region of the grain/chaff stream (C) supplied from the elevation phase of the final cleaning (5).

12. Device according to claim 11, **characterised in that** the cross conveyor (16) provided at the outlet end of the elevating conveyor (8, 8') is provided with at least one auger (19) which displaces the inflowing mixture (C) axially in a distribution pipe (18), with which partial quantities of the mixture (C) forming the grain/chaff stream displaced in the distribution pipe (18) are on the one hand conveyed out through an axial slot (20) in the base and on the other hand fed in the conveying direction (35) to a filling level detector (21), wherein the latter cooperates with at least one accelerating roller (22) rotating beneath the axial slot (20) in such a way that the material distribution (36) is controllable by means of a change in their distance (AE) in the region of the axial slot (20).

13. Device according to any one of claims 11 to 12, **characterised in that** the cross conveyor (16) has two feed inlets (17,17') at the ends in the region of the distribution pipe (18), of which in each case one auger (19,19') displaces the mixture (C) towards the pipe centre (M'), a corresponding filling curve (FK, FK') builds up in this region and this can be detected by the controllable filling level detector (21).

14. Device according to any one of claims 7 to 11, **characterised in that** a threshing unit (7") arranged substantially centrally and in a mirror-inverted manner to the longitudinal central plane (M) of the system is associated with the cutting mechanism (2) undertaking the mowing path.

15. Device according to any one of claims 7 to 11, **characterised in that** the cross conveyor (16') provided at the outlet end of the elevating conveyor(s) (8, 8') is formed by at least one cross-oscillating conveyor (41, 41') preparing the final cleaning, in such a way that a first phase of a sieving and sifting process (SSV) with uniform conveying positions of bottom-placed grain (LK) and top chaff (LS) can be achieved.

## Revendications

1. Procédé de battage pour la récolte de cultures battues, dans lequel celles-ci sont séparées d'un produit récolté (3) à ramasser, en particulier sous forme de céréales, celui-ci est amené, après un processus de ramassage (flèche B) s'effectuant à l'encontre d'un sens de marche de travail (AF), à une phase de battage (4) et, pendant celle-ci, le produit récolté (3) est préparé (flèche C, flèche D) sous forme des cultures battues respectives ainsi que des impuretés sous forme de paille (SR) et de menue paille (SP'), de telle sorte que des impuretés essentielles pouvant être évacuées (flèche D) sont séparées des cultures battues, celles-ci sont amenées en tant que mélange avec la menue paille ou des particules fines similaires en tant que flux de grains et de menue paille (C) à un nettoyage final (5) et ensuite les grains exempts de ces impuretés résiduelles sont collectés en tant que cultures battues, **caractérisé en ce que** pendant au moins une phase d'amenée (Z) située en amont du nettoyage final (5), un mouvement de transport (T) présentant une composante dans la direction verticale (R) et une composante dans le sens de marche de travail (AF') est communiqué à l'au moins un flux de grains et de menue paille (C).

2. Procédé de battage selon la revendication 1, **caractérisé en ce que** le flux de grains et de menue paille (C) à déplacer en plusieurs phases vers un nettoyage final supérieur (5) est guidé dans un espace restreint au moyen des mouvements de transport (T) et qu'ainsi une longueur (LB) du système de battage et d'acheminement définissable dans le sens de marche de travail (AF) peut être réduite au minimum, de telle sorte qu'un système de récolte et d'acheminement présentant une largeur de travail (AB) en grande partie variable dans le sens de marche de travail (AF) peut être positionné après une modification sous forme d'un réglage de conduite (flèche S) s'effectuant transversalement au sens de marche de travail (AF), de telle sorte que dans un sens de déplacement sur route (SF) ainsi défini, ce système peut être déplacé en grande partie de manière autonome dans le trafic public.

3. Procédé de battage selon la revendication 1 ou 2, **caractérisé en ce que** le flux de grains et de menue paille (C) à acheminer vers le haut à partir de la phase de battage avec le mouvement de transport (T) suivant est amené au nettoyage final (5) dans une ou plusieurs direction(s) pour évacuer la menue paille (SP) et le flux de grains et de menue paille (C) est guidé pendant le nettoyage dans des axes de mouvement respectifs dans le sens de marche de travail (AF) ou à l'encontre de celui-ci.

4. Procédé de battage selon l'une quelconque des revendications 1 à 3, **caractérisé en ce que** le grain du flux de grains et de menue paille (C) acheminé vers le haut et divisé pendant le nettoyage final (5) est introduit dans au moins un récipient collecteur (6, 6') situé en haut par rapport au processus de ramassage et de battage (B), dans lequel, avant l'introduction du grain dans le récipient collecteur (6, 6') situé en haut, la menue paille (SP) est évacuée dans une ou plusieurs phase(s) de séparation et pour séparer la menue paille (SP) du flux de grain et de menue paille (C), une combinaison de séparateurs pneumatiques (flèche 37) et de tamis (flèche 38) est utilisée.

5. Procédé de battage selon l'une quelconque des revendications 1 à 4, **caractérisé en ce que**, à partir d'une voie de fauchage définissant une largeur de coupe avec plusieurs lignes de récolte (EZ), le produit récolté (3) est saisi dans au moins deux voies de fauchage partielles (TB, TB'), puis celles-ci sont introduites dans la zone de trajets d'acheminement, de battage et de séparation séparés, le produit récolté (3) est retraité en grande partie parallèlement dans deux systèmes et, après un mouvement de transport (T) d'acheminement vers le haut du grain et de la menue paille, le grain est séparé et collecté au moyen d'un nettoyage final (5) consécutif.

6. Procédé de battage selon l'une quelconque des revendications 1 à 5, **caractérisé en ce que**, dans la zone des voies de fauchage partiels (TB, TB'), le produit récolté (3) coupé est réacheminé respectivement dans deux flux d'acheminement partiels (9, 10 ; 11, 12) réunis transversalement, ces deux flux d'acheminement partiels (9, 10 ; 11, 12) sont respectivement amenés ensemble à un processus de battage, ensuite deux flux d'acheminement séparés sont transférés dans une phase de séparation (13, 14 ; 13', 14') respective et ici, une évacuation des impuretés (flèche D) est activée et les cultures battues avec des impuretés résiduelles sont amenées selon le flux de grains et de menue paille (C) à un nettoyage final (5) situé en haut dans le système.

7. Dispositif pour la mise en œuvre du procédé selon l'une quelconque des revendications 1 à 6, dans lequel le produit récolté (3) amené par un mécanisme de coupe ou un dispositif de ramassage (2) similaire est introduit dans un groupe de battage (4), de la paille (flèche D) ainsi qu'un flux de grains et de menue paille (C) sont séparés de celui-ci et, après le nettoyage final (5) de celui-ci, le grain peut être amené à une trémie collectrice (6), **caractérisé en ce que** le groupe de battage (4), pour le ramassage du flux de grains et de menue paille (C) évacué de celui-ci, coopère avec un convoyeur ascendant (8, 8') déviant celui-ci et définissant un trajet d'acheminement dirigé vers le haut par rapport au groupe de battage (4), de telle sorte que le flux de grains et de menue paille (C) présente, au moins par phases, un mouvement de transport (T) présentant une composante dans la direction verticale (R) et une composante dans le sens de marche de travail (AF').

8. Dispositif selon la revendication 7, **caractérisé en ce qu'**un ou plusieurs convoyeurs ascendants (8, 8') est/sont prévu(s) sur l'au moins un groupe de battage (7, 7', 7") disposé près du sol.

9. Dispositif selon la revendication 7 ou 8, **caractérisé en ce que** le/les convoyeur(s) ascendant(s) (8, 8') coopèrent avec au moins un convoyeur transversal (16).

10. Dispositif selon l'une quelconque des revendications 7 à 9, **caractérisé en ce qu'**au mécanisme de coupe (2) ramassant la voie de fauchage sont associés deux groupes de battage (7, 7') agissant sensiblement parallèlement l'un à côté de l'autre avec au moins un convoyeur ascendant (8, 8'), de telle sorte qu'une voie de fauchage définissant une largeur de travail (AB) plus grande ou au moins aussi grande en comparaison des moissonneuses-batteuses connues peut être reçue, de telle sorte que le produit récolté (3) peut maintenant être amené au système et retraité dans celui-ci par l'intermédiaire de chemins d'acheminement comparativement plus courts.

11. Dispositif selon l'une quelconque des revendications 7 à 10, **caractérisé en ce qu'**au moins un convoyeur transversal (16) saisissant le mélange affluant dans la zone avant le nettoyage final (5) est prévu dans la zone du convoyeur ascendant (8, 8') saisissant le flux de grains et de menue paille (C) à acheminer vers le haut, de telle sorte qu'une épaisseur de mélange (33) en grande partie constante peut être mise à disposition pour la séparation dans la zone du flux de grains et de menue paille (C) amené au nettoyage final (5) à partir de la phase de convoyeur ascendant.

12. Dispositif selon la revendication 11, **caractérisé en ce que** le convoyeur transversal (16) prévu au niveau de l'extrémité côté sortie du convoyeur ascendant (8, 8') est pourvu d'au moins une vis sans fin (19) déplaçant axialement le mélange (C) affluant dans un tube de distribution (18), avec laquelle des quantités partielles du mélange (C) formant le flux de grains et de menue paille déplacé dans le tube de distribution (18) sont d'une part évacuées par une fente axiale (20) côté sol et d'autre part amenées dans la direction d'acheminement (35) à une détection de niveau de remplissage (21), dans lequel celui-ci coopère avec au moins un cylindre d'accélération (22) tournant en dessous de la fente axiale (20), de sorte que la répartition du produit (36) peut être commandée avec la variation de distance (AE) de celui-ci dans la zone de la fente axiale (20).

13. Dispositif selon l'une quelconque des revendications 11 à 12, **caractérisé en ce que** le convoyeur transversal (16) présente dans la zone du tube de distribution (18) deux entrées d'alimentation (17, 17') côté extrémité, à partir desquelles respectivement une vis sans fin (19, 19') déplace le mélange (C) vers le milieu de tube (M'), une courbe de remplissage (FK, FK') correspondante s'établit dans cette zone et celle-ci peut être acquise avec la détection de niveau de remplissage (21) réglable.

14. Dispositif selon l'une quelconque des revendications 7 à 11, **caractérisé en ce qu'**au mécanisme de coupe (2) ramassant la voie de fauchage est associé un groupe de battage (7") disposé sensiblement au centre et en symétrie par rapport au plan médian longitudinal (M) du système.

15. Dispositif selon l'une quelconque des revendications 7 à 11, **caractérisé en ce que** le convoyeur transversal (16') prévu à l'extrémité côté sortie du/des convoyeur(s) ascendant(s) (8, 8') est formé par au moins un convoyeur transversal oscillant (41, 41') préparant le nettoyage final, de telle sorte qu'une première phase d'une opération de tamisage et de séparation (SSV) avec des couches d'acheminement régulières de grains (LK) situés en bas et de menue paille (LS) située en haut peut ainsi être atteinte.
